# EUROPEAN PATENT APPLICATION

(11) **EP 4 815 589 A1**
(43) Date of publication of application: **30.09.2026**
(21) Application number: 25166820.8
(22) Date of filing: 27.03.2025
(51) Int. Cl.: H04W 68/02, H04W 74/0833

(54) **INTERNET OF THINGS DEVICE AND READER PARTICIPATING IN AN IOT ACCESS PROCEDURE**

(71) Applicant: Panasonic Intellectual Property Corporation of America, Torrance, CA 90504 (US)
(72) Inventor: DHANANJAYA, Harshith, 63225 Langen (DE); SUZUKI, Hidetoshi, Osaka, 571-8501 (JP); KUANG, Quan, 63225 Langen (DE)
(74) Representative: Grünecker Patent- und Rechtsanwälte PartG mbB

(57) **Abstract**

The present disclosure relates to an Internet of Things, IoT, device comprising the following. A transceiver of the loT device receives a paging message from a reader. A circuitry of the loT device determines whether to perform a re-access for a current access procedure, based on the received paging message and a status of the current access procedure. Furthermore, a default status of the current access procedure is successful or unsuccessful.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0 or version 18.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing an loT device to perform an improved loT access procedure.

In an embodiment, the techniques disclosed here feature an Internet of Things, loT device comprising the following. A transceiver of the loT device receives a paging message from a reader. A circuitry of the loT device determines whether to perform a re-access for a current access procedure, based on the received paging message and a status of the current access procedure (e.g. successful, uncertain, or unsuccessful). Furthermore, a default status of the current access procedure is successful or unsuccessful.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: shows an overview of an A-IoT system,
- **Fig. 3**: illustrates a first topology of an IoT communication between a base station and an IoT device,
- **Fig. 4**: illustrates a second topology of an IoT communication between a base station and an IoT device, with an intermediate node,
- **Fig. 5**: illustrates an exemplary implementation of a D2R transmission in the first topology of Fig. 3,
- **Fig. 6**: illustrates an exemplary implementation of a D2R transmission in the second topology of Fig. 4,
- **Fig. 7**: illustrates an exemplary implementation of D2R and R2D transmissions in the second topology of Fig. 4,
- **Fig. 8**: illustrates an access procedure, including the message exchange, between an IoT device and a reader, wherein the access procedure comprises different operations, such as the random access procedure, the inventory operation, and the command-response operation,
- **Fig. 9**: illustrates data collisions in an access procedure,
- **Fig. 10**: illustrates an exemplary and simplified structure of an IoT device and a reader,
- **Fig. 11**: illustrates a simplified and exemplary IoT device structure according to a basic implementation of the improved IoT access procedure,
- **Fig. 12**: is a sequence diagram for an exemplary IoT device behaviour in line with the IoT device of Fig. 11,
- **Fig. 13**: illustrates a simplified and exemplary reader structure according to an exemplary implementation of the improved IoT access procedure,
- **Fig. 14**: is a sequence diagram for an exemplary reader in line with the node of Fig. 13,
- **Fig. 15**: is a first signaling diagram of an exemplary and simplified implementation of the improved IoT access procedure, assuming that the default status for a current access procedure is unsuccessful,
- **Fig. 16**: is a second signaling diagram of an exemplary and simplified implementation of the improved IoT access procedure, assuming that the default status for a current access procedure is successful,
- **Fig. 17**: is a signaling diagram of an exemplary and simplified variant of the First Solution of the improved IoT access procedure,
- **Fig. 18**: is a signaling diagram of an exemplary and simplified first implementation of the First Solution of the improved IoT access procedure,
- **Fig. 19**: is a signaling diagram of an exemplary and simplified second implementation of the First Solution of the improved IoT access procedure,
- **Fig. 20**: is a signaling diagram of an exemplary and simplified third implementation of the First Solution of the improved IoT access procedure,
- **Fig. 21**: is a signaling diagram of an exemplary and simplified variant of the Second Solution of the improved IoT access procedure,
- **Fig. 22**: is a signaling diagram of an exemplary and simplified first implementation of the Second Solution of the improved IoT access procedure,
- **Fig. 23**: is a signaling diagram of an exemplary and simplified second implementation of the Second Solution of the improved IoT access procedure,
- **Fig. 24**: is a signaling diagram of an exemplary and simplified third implementation of the Second Solution of the improved IoT access procedure,
- **Fig. 25**: is a signaling diagram of an exemplary and simplified variant of the Third Solution of the improved IoT access procedure,
- **Fig. 26**: is another signaling diagram of an exemplary and simplified variant of the Third Solution of the improved IoT access procedure, involving two IoT devices, and
- **Fig. 27**: shows exemplary functional split options in 5G open-radio access network (O-RAN).

### DETAILED DESCRIPTION

### 5G NR system architecture and protocol stacks

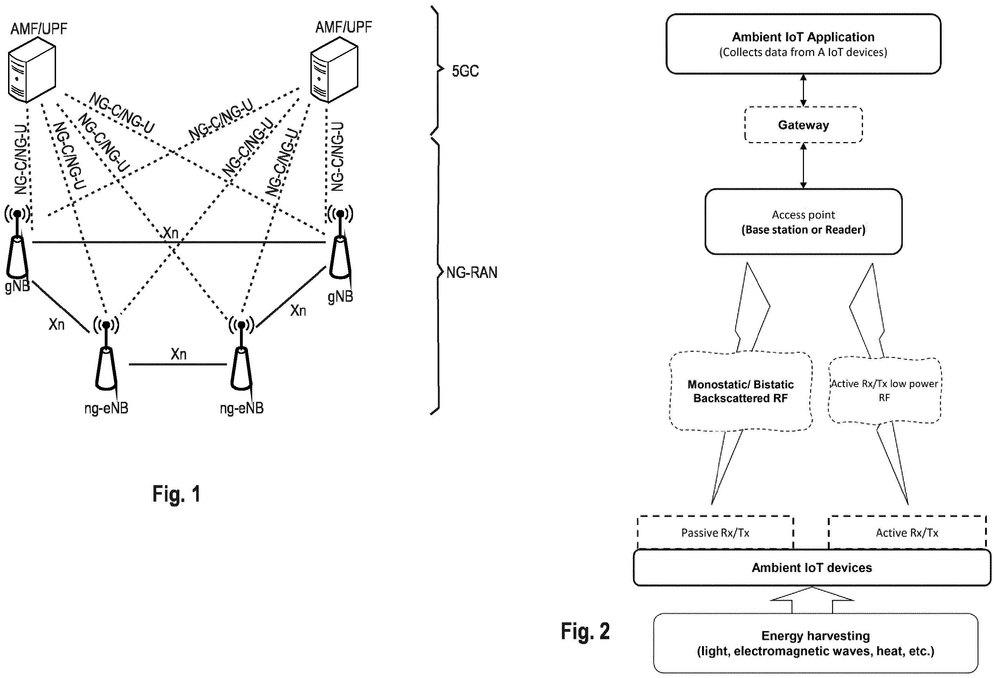

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v18.3.0, section 4).

### Ambient IoT Devices

An ambient Internet of Things device (A-loT device) is a new type of device, introduced to be supported by 5G NR or a later generation (e.g. 6G) technology. A-loT devices can be understood as loT devices that have the ability to harvest energy from natural or ambient sources, such as vibration, light, heat or a carrier wave (CW), e.g. provided by the base station, or the intermediate node, or a separate CW node. The energy harvesting technology can be crucial for the loT market to reduce the device operation costs. The power consumption and complexity of A-loT devices can be less compared to existing 3GPP technologies, such as MTC (machine type communication), NB-loT (NarrowBand loT), or RedCap (Reduced Capability). For instance, an ambient loT device can be operated with a small battery or even without a battery and further may not require battery replenishment. Another term is "zero energy device", due to their capability to operate without a dedicated battery source. An A-loT device may be an ultra-low-complexity device with ultra-low power consumption for very-low-end loT applications. Examples for A-loT devices include - without any limitation - wearables, smart home devices, automotive devices, sensors, smart keys, healthcare devices, etc.

A-loT devices may lack RRC states. For example, the A-loT protocol stack may support only a Medium-Access-Control (MAC) layer and a physical (PHY) layer, which can provide service to the topmost layer (e.g. A-loT application layer) to send/receive data over the A-loT air interface, i.e., the interface between the reader and the device. Such new specifically designed operation states may have to be defined and configured for A-IoT devices. For example, new states may likely be introduced for the MAC layer, such as one or more of ON, OFF, and RETENTION/SLEEP states, which may be useful to support discontinuous transmission/reception (e.g. DRX) or energy saving criteria of low power devices. ARQ (Automatic Repeat Request) and Hybrid ARQ transmission protocols that ensure reliable data delivery may or may not be supported by A-loT devices. A-loT devices have limited power available, resulting in reduced time periods of communication capability. Further, full device registration with the network might be difficult for loT devices, although a simplified registration or identification might be supported.

A-loT devices may not support mobility (e.g. no cell selection/re-selection/handover functions, as in legacy NR).

The above characteristics of an A-loT device facilitate the wide deployment of the devices for various applications. The integration of A-loT devices into 5G and future technologies pose a demanding problem that is addressed in the present disclosure.

Importantly, it is noted that the present disclosure is not limited to A-loT devices, but may also be applicable to any other loT devices (e.g. other types, such as Critical loT, Massive loT, Broadband loT, Narrow-Band loT etc.) or even more generally to other devices (not necessarily loT devices) that benefit from the improvements of the present disclosure. The terms loT device and A-loT device are used interchangeably in this disclosure as examples of such devices; alternatively, the terms low-power-consumption device or low-complexity transceiver device could be used.

**Fig. 2** is an overview of an A-loT system, including the Ambient loT devices, an access point, an optional gateway and including A-loT applications. As apparent from Fig. 2, the A-loT devices may harvest energy from their environment, i.e. their ambient. The A-loT devices may be able to communicate using passive reception and transmission (e.g. passive Rx/Tx) by monostatic or bistatic backscattering or alternatively may have an active Rx/Tx (low power) radio frequency (RF) part. The A-loT devices may communicate via an access point (or a base station or reader) with the A-loT applications that may collect data from the A-loT devices. A gateway may be optionally between the access point and the A-loT applications.

More details on use cases, deice constraints and performance requirements as well as KPIs (Key Performance Indicators) can be obtained from the document 3GPP TR 22.840 v19.0.0.

### IoT Topologies

Two different topologies are supported for the loT communication between the loT device and the network. More details on topologies can be obtained from the documents 3GPP TR 22.848 v19.0.0 and TR 22.840 v19.0.0. However, the present disclosure applies to other topologies as well.

In the following, a node communicating with an loT device, for example, receiving data from or transmitting data to the loT device, may be also referred to as a reader. The reader can be e.g. a base station, or a UE etc.

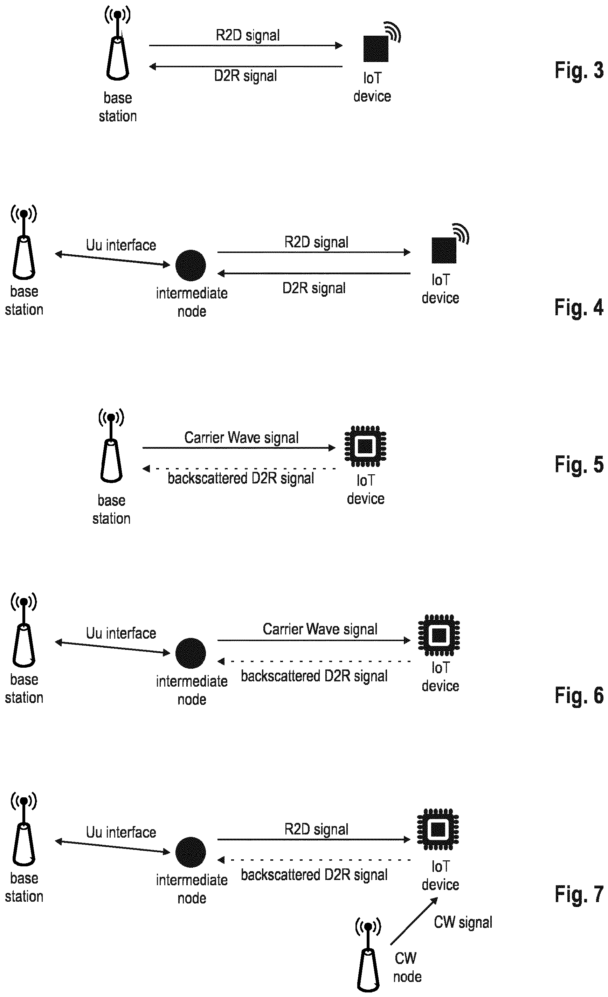

In a first topology as illustrated in **Fig. 3**, an loT device directly and bidirectionally communicates with a reader (such as a base station) over a wireless channel. In general, the A-loT device may be any kind of loT device. The communication may include transmitting and/or receiving signals that may carry data information or control information. The data information may include e.g. user data, such as measurements results obtained by the loT device. The control information can be signaling information or signals such as control signals, reference signals or the like. In a further variant, not explicitly illustrated in Fig. 3, the direct communication with the base station may further include communication via one or more distributed units, DU, of the base station. A base station may operate one or more cells.

In a second topology as illustrated in **Fig. 4**, an loT device bidirectionally communicates with an intermediate node that is located between the loT device and the reader (again e.g. a base station). The intermediate node could be for instance a User Equipment, an Integrated Access and Backhaul (IAB) node, a relay, a Network-Controlled Repeater (NCR) or any other suitable entity that supports IoT. The intermediate node is connected to both the base station and the loT device and transfers the communication (e.g., user data and/or signaling) between the loT device and the base station. The base station may communicate with the intermediate node via a first interface (exemplified in Fig. 4 as the Uu interface, e.g. corresponds to UE - gNB interface in 5G NR). The intermediate node may communicate with the loT device via a second interface. The present disclosure is not limited to any specific interface definition. In general, the first and second interfaces in Fig. 4 may e.g. be both wireless interfaces.

For any topology in general, the reader is an equipment that directly communicates with the A-loT device, in the first topology the reader is a base station, and in the second topology the reader is an intermediate node (e.g. UE). Communication channels between the A-loT reader and A-loT device are herein referred to as reader to device (R2D) for data transmissions from reader to device, and device to reader (D2R) for data transmissions from device to reader.

**Fig. 5** illustrates an exemplary implementation of a D2R transmission in the first topology of Fig. 3, where the base station functions as the reader and generates the Carrier Wave, CW, signal for the loT device. The base station transmits the CW signal to the loT device, and the loT device may backscatter and modulate the CW signal to generate the backscattered signal as the D2R signal. Correspondingly, **Fig. 6** illustrates an exemplary implementation of a D2R transmission in the second topology of Fig. 4, where the intermediate node (e.g., a UE) functions as a reader and generates the CW signal for the loT device. The intermediate node transmits the CW signal to the loT device, and the loT device may backscatter and modulate the CW signal to generate the backscattered signal as the D2R signal.

**Fig. 7** illustrates an exemplary implementation of D2R and R2D transmissions in the second topology of Fig. 4, where an intermediate node (e.g. a UE) functions as a reader. To generate the R2D signal, the intermediate node generates the carrier wave signal, which is then modulated by the intermediate node to generate the R2D signal. The CW signal is generated by a CW node, which is arranged separately from the intermediate node, and is transmitted to the loT device. The loT device backscatters the CW signal to generate the backscattered signal as the D2R signal, which is transmitted to the UE.

### IoT Communication

Communication by loT devices covers both active transmission as well as passive backscattering (see Fig. 2). In particular, backscattering devices do not necessarily have an active transmission component but are able to modulate information on the signal (e.g. carrier wave mentioned above) received from another node (e.g. CW node, such as a UE, a WiFi node, or access point). Active transmission allows a higher range and a better quality of service (QoS), compared to backscattering devices. Energy-efficient communication is one key aspect for Ambient loT devices. In said respect, an On-Off-Keying (OOK) line coding scheme can be used as a modulation technique for loT communication in 3GPP 5G and future (e.g., 6G) communication systems, due to its simplicity and energy efficiency.

Ambient loT devices may support different types of services, such as "inventory" and "command". For either of the service request types, a baseline communication procedure may be exemplarily assumed, where in a first step (step A) an initial access trigger is sent to the device, followed by a first data communication procedure and an optional random-access-like procedure (step B), as well as a second data communication procedure between the reader and loT device (step C). The reader may transmit a message such as an initial trigger message, which is also referred to as paging message, indicating one or multiple loT devices that should respond. In response, the triggered loT device(s) may perform a random-access-like procedure and/or data communication.

Correspondingly, the initial trigger message may comprise suitable identification of a single loT device or a group of loT devices. Furthermore, in another example, the initial trigger message may not comprise any identification, in which case any and all loT devices that receive the initial trigger message could respond.

No agreements have been reached regarding an ID for an loT device, including the exact format so as to uniquely identify an loT device (at least in the 3GPP system). It can be expected that a larger number of loT devices will be operational within a network (or serviced by an access point). The loT device ID might have a large size in order to facilitate an unambiguous identification within the whole network. The device ID is e.g. generated by an entity of the core network.

In addition or alternatively, an access stratum, AS, ID could be used to uniquely identify the loT device in the area of one or a few readers. The AS ID can thus be shorter than the (full) device ID and would save overhead when being used in messages exchanged between the loT device and the reader. The AS ID is e.g. generated by the reader.

Details on the initial access for loT communication have been discussed already as well. The initial access procedure of loT devices can be achieved for example in three steps or in two steps. Additionally, or alternatively, it is possible that the initial access procedure of loT devices is performed by four or more steps.

No agreements have been reached in view of a proceeding with a down selection for the various types of accesses, e.g. including a 2-step random access, a 3-step random access, and a Contention-Free Random Access (CFRA). Further, a unified design could be used where at least 3-step and 2-step procedures are specified.

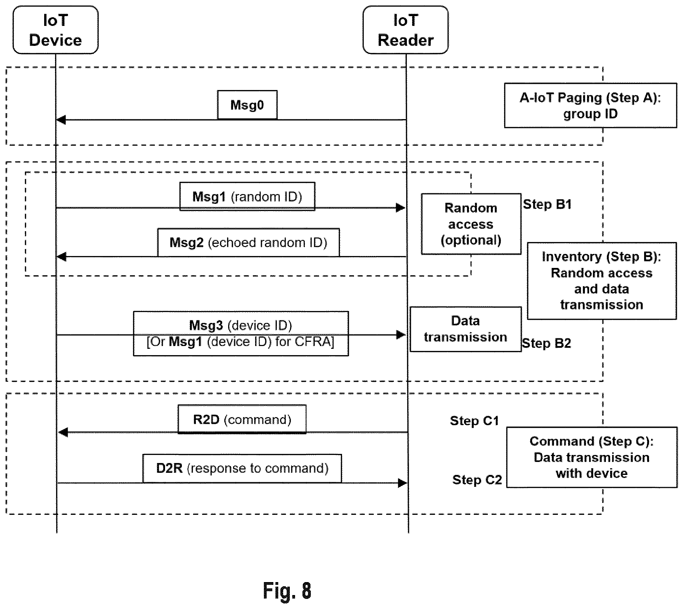

Different options on how to perform the initial access procedure will be explained in connection with **Fig. 8**, which illustrates the message exchange between the loT device and reader. It illustrates the loT paging in a Step A, subsequently the inventory (Step B), and then the Command-Response (Step C).

In more detail, Step A of Fig. 8 illustrates the loT paging. The reader, here in the role of a paging entity (e.g., based on a service request from the core network, CN) sends an loT paging message, triggering one or more loT devices to respond. In one example, the one or more paging messages required to complete the service request from the core network can be defined as one transaction. A subsequent transaction may be triggered by another service request from the CN.

In the example of Fig. 8, the initial paging is based on a group ID, which could be included in Msg0; thus, the paging is addressed to the loT devices that belong to said paged group having assigned the group ID. However, it is not necessary that the paging is based on a group ID, and other schemes may be equally possible (e.g., ID of a single loT device or the initial trigger message may not comprise any specific identification, in which case any and all loT devices that receive the initial trigger message could respond).

The inventory procedure of Step B includes the data transmission (e.g. including the device ID) and before that may optionally include a Random access procedure between the reader and the device. Assuming a contention-based access (CBRA), a random access has to be performed by the loT device with the reader, wherein the loT device transmits a Msg1 with a random ID, and the reader echoes the received random ID in a Msg2 (e.g., including the same received ID in Msg2). For instance, the random ID is generated by the loT device (e.g. it may be generated randomly or generated based on the loT device ID) in response to the initial trigger message (Msg0). Here, at least a 3-step random access is currently envisioned for Rel-19, while Rel. 19 or future releases may introduce shorter formats, e.g. 2-step. The Msg2 may optionally include further information, such as information on the occasion (e.g. time and/or frequency) for the loT device to transmit subsequent Msg3. Communicating the Msg2 can be seen as being part of step B.

For the contention-based access, the loT device considers the contention resolution as successful, if the Msg2 is received including the same random ID it transmitted to the reader in Msg1. Communicating the Msg3 can be seen as being part of step B.

In a contention-free access (CFRA) scenario, the random access can be skipped.

The second part of Step B (Step B2) includes the D2R data transmission, in which the loT device sends a device ID in a D2R message, as part of the inventory procedure. For CBRA, this message is sequentially called as Msg3, while for CFRA the D2R message can be called Msg1 sequentially after the paging message Msg0. The device ID can be expected to uniquely identify the loT device at least within the 3GGP system. Optionally, the D2R message (e.g. Msg1 or Msg3) may further include any other upper-layer data (e.g. as requested by Msg2 or depending on the upper-layer request).

For Step C (Command and Response), the reader may send a command to the triggered loT device (Step C1), and the loT device may respond to the corresponding command triggered by reader (Step C2).

At present, RAN2 has agreed to support two types of procedures for Release 19: "inventory only" and "inventory and command". The procedure with steps A and B of Fig. 8 may be termed as "inventory-only" use case, while the procedure with steps A, B, and C of Fig. 8 may be termed "inventory and command".

### Initial access and re-access for IoT devices

As apparent from above, 3GPP intends implementing an loT access procedure, according to which a plurality of loT devices can be simultaneously triggered (e.g. by a reader) to access the channel to transmit data to the reader. Consequently, in response to a suitable Initial Trigger message, a plurality of loT devices will try to access the same channel to the reader. This may be lead to interference and contention between the various loT devices, which either delays or prevents loT devices from successfully accessing the channel and performing the access procedure. Another failure reason could be that a device is not sufficiently charged yet and therefore cannot respond to the first (or several) rounds of paging. The loT access may thus fail for many reasons and this may apply to any message transmitted during Steps A and B and C, which may fail to reach the intended destination. An access performed by the loT device can be considered successful e.g. when the loT device has completed all steps involved for the access procedure. The required steps depend on the type of access procedure to be performed, e.g. whether only inventory or inventory and command is to be performed to successfully complete the access procedure.

Thus, a reader typically cannot reach all targeted devices in a coverage area by a single paging round for one transaction. As a result, multiple/subsequent paging messages that are associated with the same request from the core network (CN) may need to be supported. The reader can not only send an initial paging message to trigger the initial access (attempt) by the loT devices, but may also decide to trigger a re-access for those loT devices, which did not succeed in the first access attempt. It is exemplarily assumed that re-access for failed loT devices is controlled by the reader, by transmitting one or more re-access trigger messages.

Controlling a re-access for failed loT devices can be particularly beneficial to overcome collision among devices when paging is triggered for a large group, where devices experience contention within the group to transmit upon one (or few) D2R occasion.

Particularly, the possibility of supporting a failure mechanism was discussed in 3GPP for devices that fail to complete an access procedure or data transmission as per step B (see Fig. 8) or in general any data transmission in D2R as per step C (see Fig. 8). Those failed devices can perform re-access in the next available occasions, based on paging sent by the reader for re-access, and can repeat the steps from A, B and C.

In one example, a NACK-based mechanism can be considered for D2R messages to determine re-access for at least the D2R transmission Step B (e.g. Msg1 for CFRA, or Msg3 for CBRA). Furthermore, it can be considered whether to re-use the subsequent paging message to trigger re-access for failed loT devices. There may be a need to differentiate the Msg1 resources for CBRA random access between initial access and re-access.

However, the details related to the above are still under discussion.

In any case, it would be beneficial if devices that have successfully completed a paging procedure as in steps [A to B] or [A to C], need not respond to paging triggers sent for re-access to avoid duplicate responses.

In order to facilitate distinguishing between initial access and re-access, it may be possible to consider an ID in the paging message, so as to assist in avoiding duplicated access for the same service request that triggered the reader to transmit the paging message to the loT devices. A suitable ID could be generated by the reader itself or another entity (such as an entity from the core network, such as the entity transmitting the service request to the reader). Based on such an ID information, the loT device could determine whether to skip sending a response to the paging (e.g. if initial access was successful).

In other words, the loT device is not expected to autonomously repeat the access procedure in another opportunity, but rather the loT device is expected to follow a trigger from the reader. For example, in case a message in Step A or Step B and re-transmission is not possible, the loT will have to follow the reader by repeating the access procedure in another opportunity controlled/provided by the reader (i.e., retry the access), for example in response to receiving a further initial trigger message (Msg0).

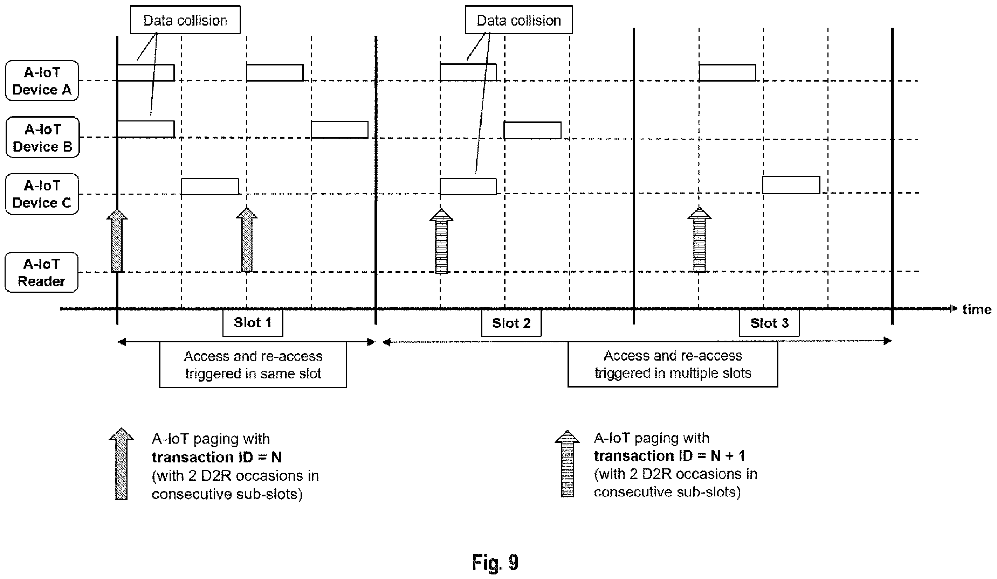

The above discussed failure scenarios will be discussed in the following in connection with **Fig. 9**, which shows three A-loT devices A, B, and C being paged by the A-loT reader. As apparent therefrom, the A-loT reader transmits a paging trigger message (Msg0 in step A of Fig. 8) for triggering access and re-access (e.g., upon failure of initial access). In the example procedure of Fig. 9, it is assumed that an ID (here e.g. termed transaction ID) is used to track different access procedures, which may also be called transactions due to the access being directed at the transferring of inventory data (e.g. device ID, see Step B2 of Fig. 8)) or command and response data (e.g. see Steps C1 and C2 of Fig. 8). Other possible terms for the transaction ID are access procedure ID (or simply access ID), paging ID, or transaction number, access number, paging number etc. Correspondingly, for one transaction with one transaction ID, the reader attempts to reach the loT devices, which have to perform an initial access procedure, and possibly have to perform one or more re-access procedures if the initial access procedure fails.

The access and re-access for the same transaction with transaction ID N occurs in different sub-slots within one slot, illustrated in Slot 1 of Fig. 9. A subsequent access with transaction ID N+1 on the other hand occurs in one slot, while re-access for said same transaction N+1 is triggered in a subsequent different slot (see Slots 2 and 3 of Fig. 9). As apparent, access and re-access may be triggered in the same slot or may sequentially be triggered in different (consecutive or nonconsecutive) slots.

In the example of Fig. 9, it is assumed that the initial access attempt is triggered for the first sub-slot of Slot 1 and is only successfully completed by loT device C. On the other hand, a transmission (e.g., D2R or R2D transmission) of the access procedure collides between loT devices A and B, such that neither can successfully complete the access. The reader then triggers a re-access for the same transaction N in the third sub slot of Slot 1, in which IoT devices A and B respond to the re-access trigger, but loT device C not (due to the previous successfully completed access).

Similarly, due to collision of a transmission, the initial access triggered by the reader in the second sub-slot of Slot 2 is successfully completed by loT device B, but failed for loT devices A and C. The reader then triggers re-access for the same transaction N+1 in the second sub-slot of Slot 2, such that IoT devices A and C respond to the re-access trigger, but not loT device B (which previously completed the access successfully).

### Further improvements

In current 3GPP operations however, several details remain unclear. For instance, upon failure of a transaction in paging procedure after sending message in D2R at step B or step C, it is unclear about how and when devices can consider to re-access in the next paging occasion.

For instance, devices may be expected to skip (re)access for the same transaction ID to avoid duplicated responses. However, it remains unclear how a device can determine whether to skip the transaction or to respond to the received transaction ID. Further, the procedure to determine failure or success of the ongoing procedure is not clear either, and how the loT device decides to skip or to respond during re-access triggered occasions. Moreover, it remains unclear whether a timer is to be used, and if so, what the role of the timer is in relation to avoiding duplicated responses or triggering re-access mechanism. Still further, it remains unclear whether an explicit message from the reader is used, and if so, how it should be used to require indicating devices to skip duplicated response or to trigger re-access.

The inventors thus have identified the possibility to define an improved loT access procedure and parts thereof, which facilitate meeting the above needs and avoiding one or more of the above described disadvantages. The present invention relates to different solutions and variants for such an improved loT access procedure performed between a reader and an loT device.

### Solutions

In the following solutions, loT devices, nodes, integrated circuits and respective methods are provided for the improved loT access procedure to facilitate meeting the above needs. The present disclosure addresses the integration of loT devices into communication networks, particularly, according to 5G communication systems or future (e.g. 6G) communication systems. In particular, while 3GPP is currently developing Rel. 19 of the 5G (-Advanced) mobile communication system, 3GPP has already started planning for the next generation, 6G, of communications systems.

Different implementations and variants of the improved loT access procedure will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "**base station**" or "**radio base station**" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

Communication between the UE and the base station is typically standardized and may be defined by different layers, such as PHY, MAC, RRC etc. (see above background discussion).

The term "**IoT device**" covers any loT devices (such as Ambient loT, Critical loT, Massive loT, etc.) but also other devices with possibly power or processing limitations. Correspondingly, the present disclosure is not limited to A-loT devices mentioned above, but may also be applicable to any other loT devices (e.g. other types, such as Critical loT, Massive loT, Broadband loT, Narrow-Band loT etc.) or even more generally to other devices that benefit from the improvements of the present disclosure. For example, the terms loT device and A-loT device are used interchangeably in this disclosure; alternatively, the term low-power-consumption device or low-complexity transceiver device could be used instead as well. Examples for A-loT devices include - without any limitation - wearables, smart home devices, automotive devices, sensors, smart keys, healthcare devices, etc.

The term "**reader**" refers to an entity communicating with an A-loT device and, for example, receiving information from or transmitting information to the A-loT device; it may be also referred to as a "node". The "node/reader" can be e.g. a base station, or a UE or an intermediate node etc.

An initial access is the first access performed for an access procedure, and the term "**re-access**" refers to a repeated access of the same access procedure, which was performed already before between an loT device and a reader, wherein this previously-performed access was completed successfully or not. At least the initial access is performed for one access procedure, which may further involve one or more re-access procedures. One access procedure, with the initial access and possibly one or more re-accesses, can also be called transaction.

The term "**default status**" refers to a status that is defined as a default. In the present disclosure the term relates to the status of an access procedure, performed between an loT device and a reader, wherein the loT device and/or the reader assign a default status when performing the access procedure. The default status can be successful or unsuccessful, and in other examples the default status can be successful, uncertain (being unclear whether already successful or unsuccessful) or unsuccessful.

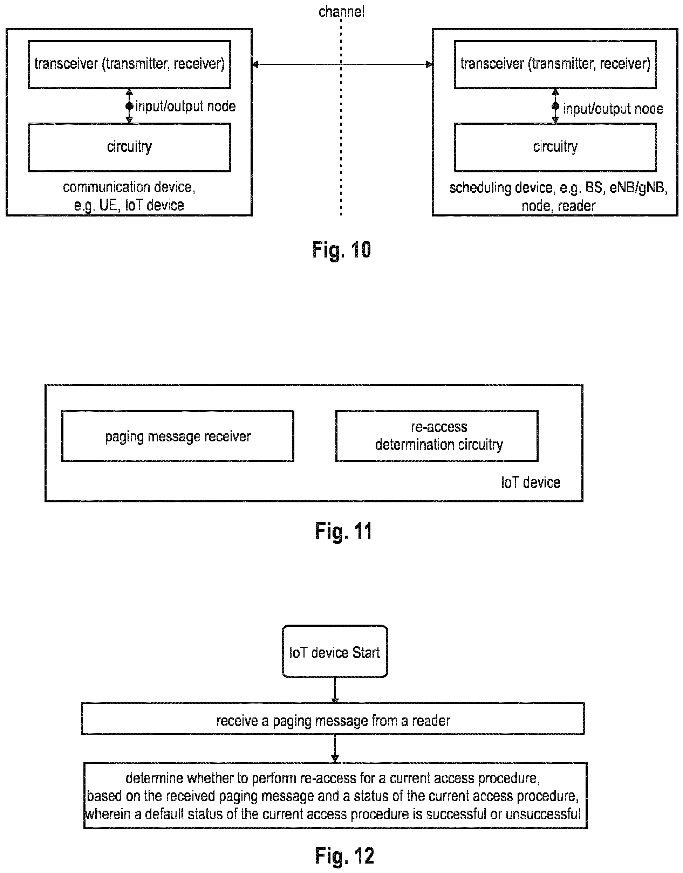

**Fig. 10** illustrates a general, simplified and exemplary block diagram of an loT device (as an example of a communication device) and a node (as an example of a scheduling device, could be also a base station, intermediate node connected to a base station or a CW node or a reader) forming a communication system. In the following, it is exemplarily assumed that the node is a reader.

The communication device (IoT device) may comprise a transceiver and circuitry. The transceiver in turn may comprise and/or function as a receiver and a transmitter. The circuitry (e.g. processing circuitry) may be one or more pieces of hardware such as one or more processors or any LSIs. Between the transceiver and the circuitry there is an input/output point (or node) over which the circuitry, in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The term "transceiver" is used for hardware and/or software components that allow the communication device, and the scheduling device, to transmit and/or receive radio signals over the (wireless) channel, for example, a physical wireless channel. The transceiver, functioning as a transmitter, may be responsible for performing the process of transmitting and other processes related thereto. The transceiver, functioning as a receiver, may be responsible for performing the process of receiving and other processes related thereto, such as monitoring a channel. The transceiver may perform processes and operations, such as transmitting and/or receiving signals, as described with respect to the solutions of this disclosure.

The circuitry may implement control tasks such as controlling the transceiver to transmit user data and control data provided by the circuitry and/or receive user data and control data, which is further processed by the circuitry. The circuitry may also be responsible for performing other processes such as determining, deciding, calculating, measuring, etc. Moreover, the term "circuitry" can also be exemplarily implemented by processing circuitry formed by one or more processors or processing units, etc. The circuitry may perform any processes and operations, such as determinations, as described with respect to the solutions of this disclosure.

The loT device and the reader (e.g., base station) are communicating with each other over a (wireless) physical channel, respectively, using their transceivers. The reader and the loT device are capable of transmitting as well as receiving radio signals via the channel. Together, the reader and the loT device form a communication system, for example, a 5G or future communication system. The communication system may further include other entities such as further base stations, intermediate nodes, reader and/or loT devices. Any of the solutions may be implemented in the loT device, the base station, the reader and/or communication system where appropriate.

Moreover, it is noted that the loT device as described in any of the solutions of this disclosure may be integrated on or as an integrated circuit (IC). Moreover, the integration does not necessarily include the entire transceiver. The transceiver is, in general, not necessarily a part of the loT device or the integrated circuit. The loT device may be connected to an external transceiver (module, optionally including an antenna) connected to the loT device over a port on the loT device. Asimilar structure applies to the reader, which can also be integrated on or as an integrated circuit (IC).

Moreover, a computer program is provided including code instructions storable on a non-transitory medium, which when executed on one or more processors, causes the one or more processors to execute a method according to any of the solutions of this disclosure.

The present disclosure relates to different solutions (and respective implementations and variants) of an improved loT access procedure. Improved loT devices (such as UEs), improved network devices (e.g. reader) and improved integrated circuits are presented in connection therewith, which participate separately or together in the improved procedures. In the following, although an loT device is used for the description as an example for the communication device, the description is equally applicable to a communication device. Corresponding methods for the communication device behavior and the reader behavior are provided as well. The integrated circuits may correspond to the loT device and reader, and respectively their behavior.

**Fig. 11** illustrates a simplified and exemplary loT device structure according to a basic implementation of the improved loT access procedure presented in more detail below. In one example, the device structure can be implemented based on the general device structure explained in connection with Fig. 10. The various structural elements of the loT device illustrated in said Fig. 11 can be interconnected between one another e.g., with corresponding input/output nodes (not shown) e.g., in order to exchange control and user data and other signals. Although not shown for illustration purposes, the loT device may include further structural elements.

As apparent from Fig. 11, the loT device may include a paging message receiver and a re-access determination circuitry. The processing circuitry of the general device structure of Fig. 10 can be implemented as the above re-access determination circuitry of Fig. 11, and can also perform further functions as will be become apparent from below. The transceiver of Fig. 10 can be implemented as the above paging message receiver, and can also perform further functions as will become apparent from below.

One exemplary procedure is implemented by an loT device that includes the following. A transceiver of the loT device receives a paging message from a reader. A circuitry of the loT device determines whether to perform a re-access for a current access procedure, based on the received paging message and a status of the current access procedure (e.g., successful, uncertain, or unsuccessful). Furthermore, a default status of the current access procedure is successful or unsuccessful.

A corresponding exemplary method comprises the following steps performed by an loT device:
receiving a paging message from a reader,
determining whether to perform a re-access for a current access procedure, based on the received paging message and a status of the current access procedure, and
wherein a default status of the current access procedure is successful or unsuccessful.

A corresponding sequence diagram for an exemplary loT device behaviour in line with the above-discussed loT device and method is presented in **Fig. 12****.**

The above-described improved loT access procedure at the loT device facilitates achieving the objective and overcoming at least some of the drawbacks explained above. For instance, the above improved loT access procedure clarifies details on how a re-access for an access procedure is to be performed by the loT device, particularly based on defining a default status of the current access procedure. Further advantages will become apparent from the below description of the various solutions, implementations and variants of the improved IoT access procedure.

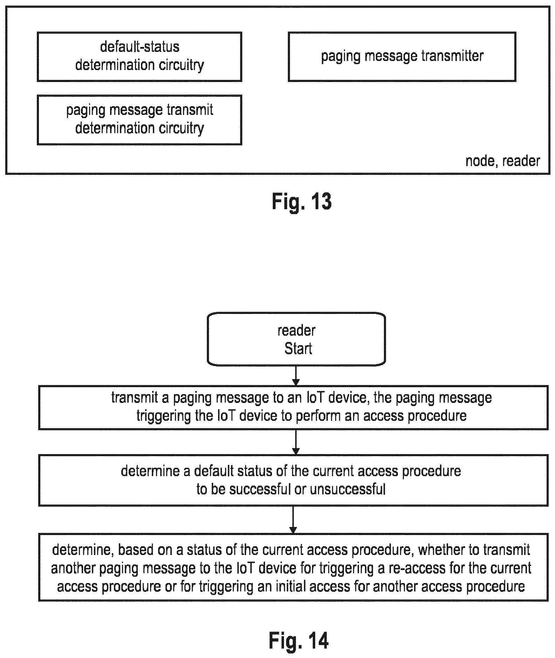

The improved loT access procedure further provides an improved reader. **Fig. 13** illustrates a simplified and exemplary reader structure according to an exemplary implementation of the improved loT access procedure, which can be implemented based on the general device structure explained in connection with Fig. 10. The various structural elements of the reader illustrated in said Fig. 13 can be interconnected between one another e.g., with corresponding input/output nodes (not shown) e.g., in order to exchange control and user data and other signals. Although not shown for illustration purposes, the reader may include further structural elements.

As apparent therefrom, the reader comprises a paging message transmitter, a default-status determination circuitry, and a paging message transmit determination circuity.

The processing circuitry of the general network device structure of Fig. 10 can be implemented as the above default status determination circuitry and paging message transmit determination circuity of Fig. 13, and can also perform further functions as will be become apparent from below. The transceiver of Fig. 10 can function as the above paging message transmitter of Fig. 13, and can also perform further functions as will become apparent from below.

One exemplary procedure is implemented by a reader that includes the following. A transceiver of the reader transmits a paging message to an loT device, the paging message triggering the loT device to perform an access procedure. A circuitry of the reader determines a default status of the current access procedure to successful or unsuccessful. The circuitry determines, based on a status of the current access procedure, whether to transmit another paging message to the loT device for triggering a re-access for the current access procedure or for triggering an initial access for another access procedure.

A corresponding exemplary method comprises the following steps performed by a reader:
transmitting a paging message to an loT device, the paging message triggering the loT device to perform an access procedure,
determining a default status of the current access procedure to successful or unsuccessful,
determining, based on a status of the current access procedure, whether to transmit another paging message to the loT device for triggering a re-access for the current access procedure or for triggering an initial access for another access procedure.

A corresponding sequence diagram for an exemplary reader behaviour in line with the above-discussed reader and reader method is presented in **Fig. 14**.

The above-described improved IoT access procedure at the reader side facilitates achieving the objective and overcoming at least some of the drawbacks explained above, in the same manner as already explained above for the loT device.

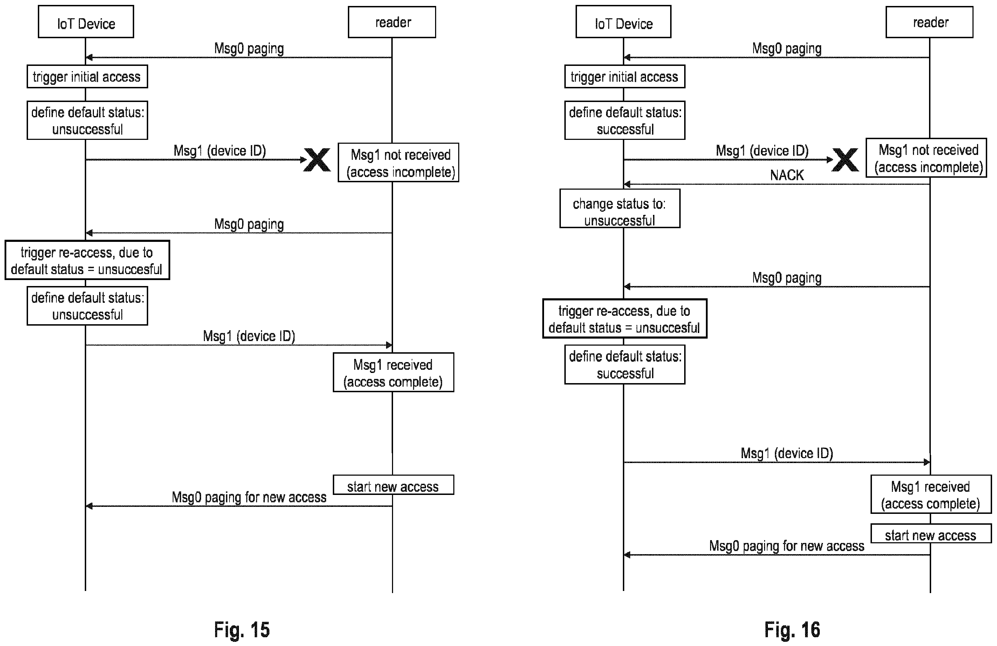

**Fig. 15 and 16** **are** signaling diagrams of exemplary and simplified implementations of the improved loT access procedure, illustrating the exchange of messages between the different participating entities (here the loT device, e.g. as an example of the communication device) and the reader (example of the network device) and the steps performed at these entities. The loT device behaviour and reader behaviour follow the above-described loT device and reader and the respective methods.

In Fig. 15, it is assumed that the default status to be defined for a current access procedure is unsuccessful. Correspondingly, when the reader pages (Msg0) the loT device, an initial access is triggered at the loT device. The loT device furthermore defines the default status of the current access procedure to be unsuccessful. It is exemplarily assumed that the access procedure involves a contention-free access, such that the loT device transmits the D2R transmission message Msg1 (see Step B1 of Fig. 8) to the reader as the next process. However, said D2R transmission is not received at the reader, such that the initial access is considered to be incomplete. The default status for the current access procedure is maintained as the default state = unsuccessful. Thus, when the reader transmits another paging message for performing a re-access, the loT device proceeds to perform the re-access for the current access procedure. As described before, the loT device again defines the default status of the current access procedure to be unsuccessful. The loT device again transmits the D2R transmission message Msg1 to the reader. This time, Msg1 is received by the reader, which thus considers the access procedure to be complete.

Therefore, considering the access procedure to be completed, the reader will eventually decide to proceed to page for a new access procedure (e.g., next transaction) and thus transmits another paging message to the loT device for triggering a new access. The further procedure between the loT device and the reader can be performed as described already above for Fig. 15. The First Solution to be described below provides a more detailed solution of the improved loT access procedure of Fig. 15. In brief, the First Solution additionally provides a positive feedback message from the reader to the loT device, in case the access procedure is completed successfully. Based on the positive feedback message, the loT device can then change the status from the default state unsuccessful to successful, so as to correctly reflect the status of the current access procedure. Changing the status to successful also facilitates skipping every access in future paging occasions.

In Fig. 16, it is assumed that the default status to be defined for a current access procedure is successful. Correspondingly, when the reader pages the loT device, an initial access is triggered at the loT device. The loT device furthermore defines the default status of the current access procedure to be successful. As with Fig. 15, it is again assumed that the access procedure involves a contention-free access, such that the loT device transmits the D2R transmission message Msg1 to the reader as the next process. However, said D2R transmission is again not received at the reader, such that the access is considered to be incomplete.

The default status for the current access procedure would be however maintained at the loT device, such that a re-access trigger for the same access procedure (if any is transmitted by the reader) would be skipped by the loT device.

If re-access should be allowed for such cases, example implementations provide a negative feedback message from the reader to the loT device (see later Second Solution, this is illustrated in Fig. 16). Accordingly, the loT device changes the status from the default successful to unsuccessful, in response to receiving the negative feedback message. In other example implementations, the default status of a current access procedure is reset or canceled after a period of time (even without receiving the negative feedback message), e.g. after one energy-saving cycle (see later Third Solution, not illustrated in Fig. 16). In any case however, the status of the current access procedure can be changed / reset to unsuccessful, such that a re-access can be triggered by the reader.

As apparent from Fig. 16, when the reader transmits another paging message for performing a re-access, the loT device proceeds to perform the re-access, in case the status of the current access procedure was changed / reset. As described before, the loT device again defines the default status of the current access procedure to be successful. The loT device again transmits the D2R transmission message Msg1 to the reader. This time, Msg1 is received by the reader, which thus considers the access procedure to be complete.

Therefore, considering the access procedure to be completed, the reader will eventually decide to proceed to page for a new access procedure (e.g., next transaction) and thus transmits another paging message to the loT device for triggering a new access. The further procedure between the loT device and the reader can be performed as described already above for Fig. 16.

As will be explained in the present disclosure, the loT device and the reader both synchronize the status determination. Thus, not only the loT device but also the reader changes the status of the current access procedure from a default status to a converse status, based on whether a feedback message regarding the current access procedure is transmitted from the reader to the loT device.

In the following, four different solutions of the above described improved loT access procedure will be described. In brief, according to the First Solution, the default status of the current access procedure is unsuccessful, and further, the status of the current access procedure is changed from the default status to the converse status being successful, based on a positive feedback message from the reader.

According to the Second Solution, the default status of the current access procedure is successful, and further, the status of the current access procedure is changed from the default status to the converse status being unsuccessful, based on a negative feedback message from the reader.

According to the Third Solution, the default status is kept as successful during a current energy-saving cycle. In other words, in one energy-saving cycle, only one access procedure can be triggered by the reader.

According to the Fourth Solution, the improved loT access procedure supports two or more of the First to Third Solutions, and different ones from the First to Third Solutions can be applied selectively to different parts of the access procedure.

In order to be able to explain the principles underlying the present disclosure in a clear, concise and understandable manner, it is exemplarily assumed that the inventory operation of Step B of an access procedure is performed as a contention-based access (CBRA), including the exchange of Msg1 and Msg2 of the optional random access of Step B1 of Fig. 8. However, the First to Fourth Solutions are correspondingly applicable to a contention free access too, without having to exchange Msg1 and Msg2 of Step B1 of Fig. 8. Correspondingly, when the below description refers to an Msg3 for the contention-based Step B1 (and no different explanation is provided), the concepts apply equally for Msg1 for the contention-free (CFRA) Step B1 of an access procedure.

### First Solution

According to the First Solution, the default status of the current access procedure is unsuccessful, and further, the status of the current access procedure is changed from the default status to the converse status being successful, based on a positive feedback message (e.g., ACK) from the reader.

Correspondingly, when the loT device receives another paging message for the current access procedure, a re-access for the current access procedure is not performed by the loT device, when the status was changed to successful. On the other hand, in case the positive feedback message is not received at the loT device, the default status unsuccessful is maintained. Therefore, in such a scenario, when the loT device receives another paging message for the current access procedure, a re-access for the current access procedure is indeed performed by the loT device, because the status is still the default status of unsuccessful.

In a corresponding manner as explained above for the loT device, the reader is able to change the status of the current access procedure. In particular, the default status of the current access procedure is assumed to be unsuccessful, but can be changed by the reader to successful, when transmitting a positive feedback message to the loT device (e.g. an ACK, or follow-up message).

This has the advantage that the access procedure is performed in a reliable way, because the access procedure requires an explicit positive acknowledgment for skipping the re-access when another paging message for the same access procedure is received. For instance, if the positive feedback message is not received at the loT device, e.g. due to a bad channel condition, the reader will be able to trigger a re-access of the access procedure at the loT device during the next paging opportunity.

According to example implementations of the First Solution, the positive feedback message positively acknowledges the receipt of a message of the current access procedure and is
- a positive acknowledgement message received from the reader for a previous message transmitted by the loT device, or
- a follow-up message received from the reader as part of the access procedure subsequent to a previous message transmitted by the loT device.

The positive feedback message acknowledges that the access procedure was successfully completed.

The loT device determines a failure of the access procedure, when a positive feedback message from the reader side is missing, e.g. due to bad channel or other failures. At the reader side, the First Solution involves that the reader detects success or failure of the various D2R transmission during the access procedure and sends one or more positive feedback messages to the loT device, e.g., one positive feedback message for acknowledging Step B (inventory) of an access procedure and/or one positive feedback message for acknowledging Step C (command-response) of an access procedure.

In particular, the access procedure can be considered to be successfully completed, when the loT device (and reader) have completed all steps involved in the access procedure. This depends on the type of access procedure, i.e. on the number of different messages that are to be exchanged by the loT device and reader for an access procedure, e.g. whether only inventory or inventory and command is to be performed to successfully complete the access procedure.

In one example, a positive acknowledgement message (explicit ACK) could be transmitted by the reader at the completion of the access procedure, e.g. in case of a type B access procedure (only inventory), when Msg3 (with device ID) is received by the reader from the loT device, or in case of a type C access procedure, when the response message is received by the reader from the loT device.

Alternatively, in case of a type C access procedure (including both inventory and command), the R2D command message is transmitted by the reader to the loT device if the D2R data transmission message (e.g. Msg3) of the inventory Step B is correctly received at the reader. This R2D command message can be considered by the loT device to be a positive feedback message (a follow-up message) for the inventory part of the access procedure, because the reader would only then transmit the R2D command, when the reader has before correctly received the Msg3 of the inventory Step B.

Nonetheless, a positive acknowledgement message (explicit ACK) could be transmitted by the reader to confirm receipt of a D2R message, e.g. after receiving the D2R command-response message of Step C2 from the loT device, so as to indicate the successful completion of the complete access procedure.

According to one exemplary implementation, the positive feedback message includes an ID of the loT device, such that the loT device is able to correctly identify that the positive feedback message relates to the access procedure currently performed by the loT device with the reader. For instance, the ID of the loT device could be the random ID (see e.g. Msg1 of Step B1 of Fig. 8), the device ID or the AS ID (see e.g. Msg3 of Step B2 of Fig. 8).

In addition or alternatively to including the ID of the loT device, the positive acknowledgement message is received in the same time resources and/or frequency resources of a subsequent time slot reserved for the loT device for transmitting or receiving a previous message of the current access procedure (e.g., time/frequency resources reserved for transmitting the Msg1 of the random-access or for receiving the paging message Msg0). By re-using such time/frequency resources reserved for the loT device, the loT device may also determine that the positive feedback message indeed relates to the access procedure currently performed with the reader.

According to example implementations of the First Solution, access procedures can be identified and thus differentiated by an access procedure ID (also called transaction ID in the following). Each access is identified by such a transaction ID, and the access procedures can be sequentially numbered for instance.

In further examples, the improved loT access procedure may also differ between different readers, which is advantageous in multi-reader scenarios where one IoT device can be paged by multiple readers for different transactions. Correspondingly, the loT device can thus distinguish between different readers and can properly perform an initial access and a re-access for different access procedures from different readers. In one example, the transaction IDs used by different readers are respectively different. The multiple readers would have to coordinate accordingly to facilitate the use of different transaction ID.

In another example, different readers can be distinguished by different reader IDs, which can be carried in the paging messages. In such a solution, the transaction IDs would be used in association with respective reader IDs, so as to be able to distinguish not only between access procedures but also between readers. The loT device determines that a paging message is directed to a same access procedure, in case both the transaction ID and the reader ID in the received paging message are the same as the corresponding transaction ID and reader ID stored for the current access procedure.

In any case, the paging messages transmitted by the reader may include a transaction ID (and possibly a reader ID) for the access procedure.

Further, the loT device keeps track of (alternative wording could be: retain or store) the transaction ID as long as necessary to be able to correctly perform or skip re-access for a current access procedure with the same transaction ID. For instance, the loT device may store the transaction ID for the current access procedure when the status is successful, so as to be able to skip a next paging for the same transaction ID. In particular, the loT device determines whether a paging message is directed to the same current access procedure by determining whether the transaction ID of the received paging message is the same as the transaction ID available in the loT device. If the new received paging message is directed to the same access procedure (i.e., same transaction ID) and the status of the current access procedure is successful, the re-access can be skipped by the loT device (in other words, the re-access trigger can be ignored).

Conversely, the loT device determines that a paging message is directed to a new access procedure by determining that the transaction ID of the received paging message is different (e.g., subsequent) to the transaction ID available in the loT device. If the new received paging message is directed to a different access procedure (i.e., different transaction ID), the loT device proceeds to perform a new initial access for the new access procedure (for the new transaction).

In a further example implementation, the transaction ID need not be stored by the loT device for the current access procedure when the status of the current access procedure is unsuccessful. The loT device determines that a paging message is directed to a new access procedure when there is no available transaction ID in the loT device to which the transaction ID of a received paging message can be compared. Such a behaviour replicates the initial power-on behaviour of an loT device, where no previous access procedure has been performed by the loT device such that the loT device responds to any detected transaction ID.

As explained in the present First Solution, the status of the current access procedure is used by the loT device to determine whether to perform or skip a re-access for the current access procedure. In exemplary implementations, the status of the current access procedure is stored by the loT device, e.g. in association with the transaction ID of the current access procedure as discussed already above.

In one example, the default status assigned at the beginning by the loT device can be stored accordingly; alternatively, the default status need not be not stored as such, rather the loT device determines the default status for the current access procedure in the absence of the available status (e.g. stored before by the loT device).

The default status and the latest status (after a possible status change) can be e.g. a 1-bit value, which allows to differentiate between successful and unsuccessful, where bit value 0 means success and bit value 1 means unsuccessful (or vice versa). As an alternative, the (default) status can be a 2-bit value, which allows to differentiate between successful, uncertain, and unsuccessful, where the bit value 0 means successful, the bit value 1 means uncertain, and the bit value 2 means unsuccessful (or a different association). The additional uncertain status is useful to reflect more clearly the actual status for a current access procedure, particularly at the time before receiving the positive feedback message.

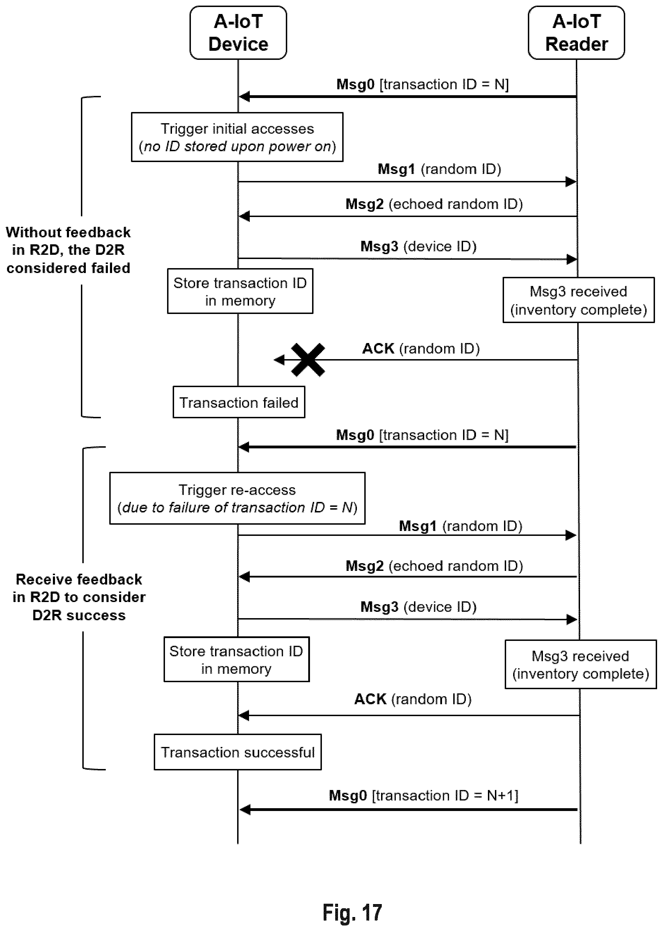

An exemplary implementation of the First Solution will be explained in connection with **Fig. 17****.** As apparent therefrom, the loT reader transmits a paging message (here Msg0) for the access procedure with a transaction ID = N. Here, it is exemplarily assumed that the access procedure is only for inventory (i.e., no command-response operation). It is further exemplarily assumed that the loT device has just powered on, and thus has no previous transaction ID stored. The paging message triggers an initial access at the loT device for the current transaction, as explained in the context of Fig. 8, e.g. the loT device performs the random access of Step B1, and performs the D2R data transmission of Step B2 (see Msg3 (device ID)). Although not illustrated, a default status of unsuccessful is defined for the thus started access procedure. The transaction ID is also stored in the loT device, according to this example.

It is further assumed that the reader receives Msg3 of Step B2, and thus transmits a positive acknowledgment message to the loT device, so as to positively acknowledge the successful completion of the access procedure. However, this positive acknowledgment message gets lost and does not reach the loT device. Therefore, in the absence of the positive feedback, the loT device maintains, as the status of the current access procedure, the default status that is unsuccessful (see "Transaction failed" in the figure).

It is then further assumed that the reader transmits another paging message for the same transaction of transaction ID = N, e.g. because other access procedures for other loT devices were not yet completed successfully. The loT device of Fig. 17 receives this next paging message

In response to this new paging message with the same transaction ID = N, the loT device performs a re-access, because the status for this transaction ID is still unsuccessful.

During the re-access, the loT device again performs the same steps as performed before for the initial access. The ACK message is again transmitted by the reader to the loT device after completing the inventory operation (i.e., after receiving Msg3).The ACK message is however properly received by the loT device. Correspondingly, the status of the current access procedure (with transaction ID = N) is changed from the default status to successful (see "Transaction successful" in Fig. 17).

Eventually, the reader might initiate the next transaction with the transaction ID = N+1 and thus transmits another paging message to the loT device(s). The loT device will respond to the paging by performing another access procedure following the above discussed principles.

As explained in the present First Solution, the default status of the current access procedure can be changed by the loT device when receiving a positive feedback message. In further exemplarily implementations, the duration during which the loT device waits for the positive feedback message can be limited. In other words, at some point the loT device determines that the current access procedure is completed, irrespectively of whether the access procedure is completed successfully or without success. There are different implementations on how the loT device determines the completion of the current access procedure.

According to a first implementation, the loT device determines that the current access procedure is completed, when an access status timer for the current access procedure expires.

According to a second implementation, the loT device determines that the current access procedure is completed, when an energy-off state of an energy-saving cycle starts.

According to a third implementation, the loT device determines that the current access procedure is completed, when a paging message initiating a subsequent access procedure is received by the loT device.

The reader may determine whether the current access procedure is completed, and a corresponding manner to the loT device behavior, e.g. based on the above first, second, and third implementations.

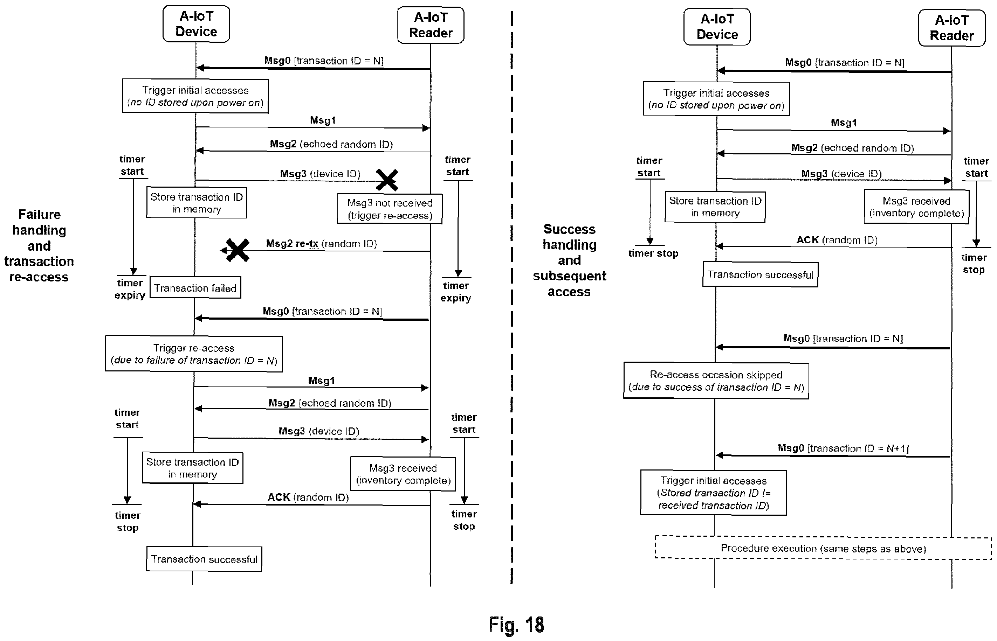

The above first, second and third implementations of the First Solution will be explained in the following in more detail with reference to Fig. 18, 19, and 20, respectively.

Correspondingly, upon determining that the current access procedure is completed, the **loT** device may stop monitoring for the positive feedback message from the reader regarding the current access procedure. Furthermore, upon determining that the current access procedure is completed, the loT device may consider the status of the access procedure as final, and no (further) change is to be expected.

According to another example, the loT device may assume a default state of uncertain for the current access procedure at the beginning, particularly in the absence of a positive feedback message. Then, upon determining that the current access procedure is completed, the loT device can change the status of the current access procedure from uncertain to the default state of unsuccessful.

In **Fig. 18****,** the above first implementation of the present First Solution is illustrated, according to which the loT device determines that the current access procedure is completed, when an access status timer for the current access procedure expires. Accordingly, a separate timer is configured for loT devices to wait for the positive feedback message from the reader. The access status timer is operated at the loT device and the reader in a corresponding manner, so as to have the same understanding of the timer.

In one example, the timer is started when the loT device performs the D2R data transmission (e.g. Msg3). Alternatively (not shown in the figure), the timer is started when the loT device receives the R2D transmission triggering the D2R data transmission, e.g. when the loT device receives the Msg2 of the random access.

The timer is stopped when receiving the positive feedback message, e.g. when receiving the positive acknowledgment (ACK) or a follow-up message in R2D (e.g., R2D command message).

Upon the expiry of the timer, the current status (e.g. default status) of the access procedure is to be considered final. Possibly, a re-access is necessary, and the loT device expects a further paging message for the current access procedure.

The feedback duration can be controlled (or pre-determined) by the reader for sending a positive feedback message to the loT devices. For instance, the reader can dynamically (or semi-statically) configure timer values to loT devices and hence get to control the waiting period. By setting the timer in a pre-determined manner, the timer is specified or pre-configured to the devices, and the reader gets to estimate the waiting period to be used. Thus, re-access occasions for the same transaction ID can be planned and scheduled efficiently in R2D by the reader.

In some variants of said first implementation (see e.g. Fig. 18), the memory handling of the stored transaction ID follows the timer events monitored by the loT device. For instance, if the positive feedback message is received from the reader before the timer expiry, the transaction ID is stored for the successful access procedure so as to be used for the next paging occasion. Thus, a subsequent paging with the same transaction ID as stored can be skipped. The loT device would then perform the next access procedure for a new transaction ID.

If the positive feedback message is not received before the time expiry, then, in one example, the transaction ID can be deleted from the memory of the loT device. Thus, a subsequent paging with any transaction ID triggers the loT device to perform an access procedure, e.g. a re-access for the current access procedure or an initial access for another access procedure. This mechanism replicates the initial power-on behaviour, where the loT device will respond to any detected transaction ID when receiving a paging.

In an alternative variant, the transaction ID is not deleted but kept stored in the loT device, and the available transaction ID can be compared with a transaction ID in a subsequent paging. Exemplarily, it can be left to the loT device to search for the same transaction ID using the stored value. Or, for a multi-reader scenario, if the device identifies that a new transaction ID is from the same reader (e.g., using reader ID included in the paging message), then, the new transaction ID can be triggered for failure handling of the last transaction ID.

In example variants of this first implementation (see e.g. Fig. 18), the status can be set as a default not to unsuccessful but to uncertain, and is then changed to unsuccessful when the access timer expires. On the other hand, if the positive feedback message is received before timer expiry, the status for the current access procedure is changed to successful. The loT device correspondingly follows the status when receiving new paging messages, and further takes into account the received transaction ID in the paging message. In detail, re-access is performed by the loT device, in case the received transaction ID of the paging is the same as the available transaction ID and in case the corresponding status is unsuccessful (or uncertain). On the other hand, a re-access is skipped, in case the received transaction ID of the paging is the same as the available transaction ID and in case the corresponding status is successful. Further, a new initial access is performed if the received transaction ID of the paging is different from the available transaction ID (irrespectively of the status for the previous access procedure).

The above-explained behaviour for the loT device and the reader of the first implementation are illustrated in Fig. 18. On the left side of Fig. 18, the failure handling and the subsequent re-access are illustrated. Accordingly, in Fig. 18, the Msg3 transmission from the loT device is performed by the loT device. The loT device and the reader start the timer at about the same time, at the time of transmitting the Msg3. However, the Msg3 transmission does not reach the loT reader.

As a further optional failure handling mechanism usable during an access procedure, the reader may transmit re-transmission requests to the loT device, e.g. for triggering the re-transmission of a failed D2R message, e.g. Msg3, by the loT device. The re-transmission requests can be transmitted by the reader for handling failures that relate to the current access procedure and may thus facilitate avoiding that the loT device needs to perform a re-access. The loT device monitors and receives such re-transmission requests and in response re-transmits the requested D2R message to the reader. In one example, the re-transmission request message includes an ID of the loT device, such that the loT device is able to correctly identify that the re-transmission request relates to the access procedure currently performed by the loT device with the reader. For instance, the ID of the loT device could be the random ID (see e.g. Msg1 of Step B1 of Fig. 8), the device ID or the AS ID (see e.g. Msg3 of Step B2 of Fig. 8).

However, it is assumed in the present scenario of Fig. 18 that also the re-transmission request message (see Msg2 re-tx) transmitted from the reader does not reach the loT device. Eventually, the access timer expires at both the loT device and the reader sides. In compliance with the First Solution, the default status of unsuccessful becomes final, and the loT device considers the access procedure to be unsuccessful.

At this point, the access procedure can be considered to be finished, albeit without success. Therefore, the loT reader decides to trigger re-access at the loT device by transmitting another paging message to the loT device for the same access procedure, for the same transaction with transaction ID = N. The loT device performs a re-access for the current access procedure, because the status for this access procedure of transaction ID = N is unsuccessful. The re-access procedure is then completed successfully by the loT device and reader. As a result, the loT reader transmits the positive ACK message (see "ACK (random ID)" in Fig. 18) to the loT device. In response, the loT device stops the timer and changes the status for the current access procedure from the default unsuccessful status to successful (see "Transaction successful" in Fig. 18).

On the right side of Fig. 18, the success handling and a subsequent new initial access are illustrated. The successful performing of the access procedure with transaction ID = N corresponds to the bottom part of the left side of Fig. 18, and is not repeated here. Even if the reader performs another paging for the same access procedure (same transaction ID = N), the loT device skips a re-access, due to the previous successfully completed access procedure. Further, the loT reader eventually decides to perform a next access procedure with the loT device (e.g., a new transaction triggered by the core network) and pages the loT device with a new transaction ID = N+1. The loT device notices the new transaction ID and starts with an initial access for the new access procedure.

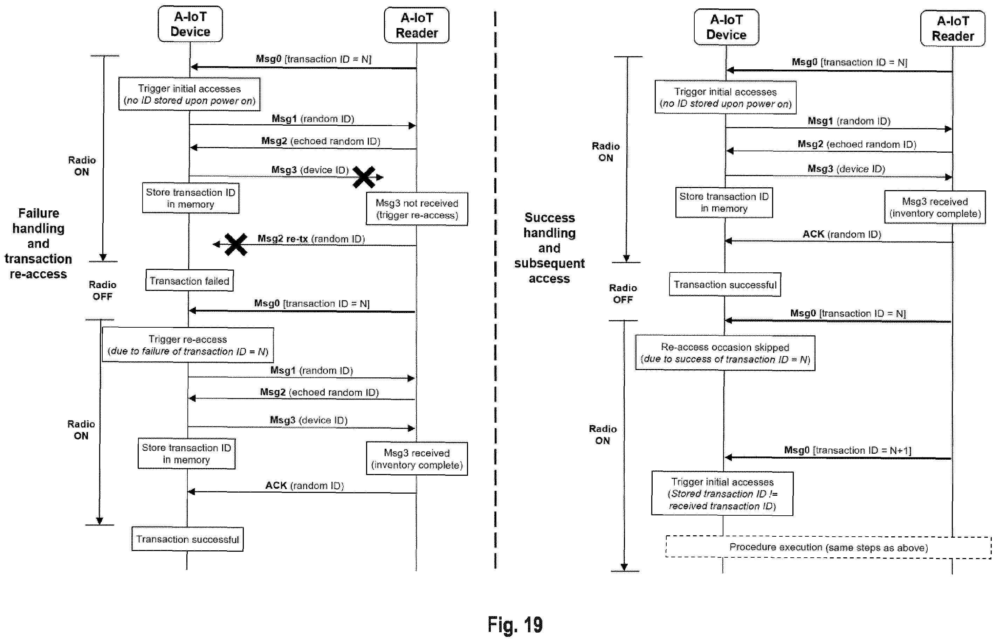

In **Fig. 19****,** the above second implementation of the present First Solution is illustrated, according to which the loT device determines that the current access procedure is completed, when an energy-off state of an energy-saving cycle starts.

In one example, the energy-saving cycle can be determined based on an energy level of the loT device and/or based on one or more timer to control switching between energy-on and energy-off states. In one example, the loT device is in an energy-on state in case the energy level is above a first energy threshold, and is in an energy-off state in case the energy level is below a second energy threshold. In one example, the first and second energy thresholds can be the same.

In case a timer is used for controlling the energy-saving cycle, said timer defines alternating time periods during which the loT device is in an energy-off state and in an energy-on state. In one example, the time periods can be of different time length.

In another implementation, both the timer and the energy level can be used to define the energy-saving cycle, where in one example the timer defines a minimum energy-on time period and a maximum energy-off time period. Furthermore, the loT device may for instance enter the energy-off state at a later point of time, in case there is enough energy left. Such a combined definition of the energy-saving cycle allows flexibility for the energy saving and harvesting, while at the same time increasing the predictability (e.g., at the reader) of the time periods during which the loT device will be in the energy-on state for exchanging (receiving and transmitting messages) with the reader (e.g. paging message, random access, etc.).

The radio of the loT device is kept active during the energy-on state or when enough energy is available, thus called Radio ON. Thus, in one example, the loT device may only expect the positive feedback message from the reader during the energy-on state but not during the energy-off state.

Correspondingly, the reader intends to transmit the positive feedback message during the energy-on state of the loT device. If the loT device receives the positive feedback message during the energy-on state, the loT device can set the status of the current access procedure to successful, and can later skip paging attempts for the same (successful) access procedure, having the same transaction ID. However, if the loT device does not receive the positive feedback message during the energy-on state, the loT device enters the energy-off state and considers the default status of unsuccessful to be final for the current access procedure (no feedback message is expected during the energy-off state). Correspondingly, the loT device will perform a re-access if so triggered by the reader when receiving another paging for the same transaction ID.

The memory handling for the second implementation of the First Solution is quite similar to the memory handling explained above for the first implementation (see e.g. Fig. 18). In one example, the loT device retains the contents of a (volatile) memory to be used during the next energy-saving cycle. Here it is exemplarily assumed that the loT devices can be defined with a suitable low-energy threshold to switch to the energy-off state and not drain its energy completely, such that the available energy is sufficient to drive the memory unit and hence retain the transaction ID stored therein at least until the next paging occasion.

For instance, if the positive feedback message is received from the reader during the energy-on state, the transaction ID is stored for the successful access procedure so as to be used for the next paging occasion. Thus, a subsequent paging with the same transaction ID as stored can be skipped. The loT device would then perform the next access procedure for a new transaction ID.

If the positive feedback message is not received from the reader during the energy-on state, then, in one example, the transaction ID can be erased from the loT device. Thus, a subsequent paging with any transaction ID triggers the loT device to perform and access procedure, e.g. a re-access for the current access procedure or an initial access for another access procedure.

In an alternative variant, the transaction ID is not deleted but can be kept stored in the loT device, and the available transaction ID can be compared with a transaction ID in a subsequent paging.

In example variants of this second implementation (see e.g. Fig. 19), the status can be set as a default not to unsuccessful but to uncertain, and is then changed to unsuccessful when the energy-off state is entered. On the other hand, if the positive feedback message is received during the energy-on state, the status for the current access procedure is changed from uncertain to successful. The loT device correspondingly follows the status when receiving new paging messages, and further takes into account the received transaction ID in the paging message. In detail, re-access is performed by the loT device, in case the received transaction ID of the paging is the same as the available transaction ID and in case the corresponding status is unsuccessful (or uncertain). On the other hand, a re-access is skipped, in case the received transaction ID of the paging is the same as the available transaction ID and in case the corresponding status is successful. Further, a new initial access is performed if the received transaction ID of the paging is different from the available transaction ID (irrespective of the status for the previous access procedure).

The above-explained behaviour for the loT device and the reader of the second implementation are illustrated in Fig. 19. On the left side of Fig. 19, the failure handling and the subsequent re-access are illustrated. Accordingly, in Fig. 19, the Msg3 transmission from the loT device is performed by the loT device. It is assumed that the Msg3 transmission fails, such that the Msg3 does not reach the reader. The loT device and the reader know about the energy saving cycle. For instance, the reader might receive information on the energy level of the loT devices (e.g., using energy status reporting message sent from loT device to report its energy level or energy availability to the reader). Alternatively, the reader may consider a minimum time during which the energy level can be kept in the energy-on state and may consider a maximum time during which the energy level can be kept in the energy-off state.

As a further optional failure handling mechanism already explained above for the first implementation (see Fig. 18), the reader may transmit re-transmission requests to the loT device, e.g. for triggering the re-transmission of a failed D2R message, e.g. Msg3, by the loT device. However, in the present scenario of Fig. 19 it is assumed that also the re-transmission request message (see Msg2 re-tx) transmitted from the reader does not reach the loT device. Eventually, the energy-off state is entered by the loT device (see Radio OFF in Fig. 19). In compliance with the First Solution, the default status of unsuccessful becomes final, and the loT device considers the access procedure to be unsuccessful.

At this point, the access procedure can be considered to be finished, albeit without success. Therefore, the loT reader decides to trigger re-access at the loT device by transmitting another paging message to the loT device for the same access procedure, for the same transaction with transaction ID = N. The loT device performs a re-access for the current access procedure, because the status for this access procedure of transaction ID = N is unsuccessful. The re-access procedure is then completed successfully by the loT device and reader. As a result, the loT reader transmits the positive ACK message (see "ACK (random ID)" in Fig. 19) to the loT device. In response, the loT device stops the timer and changes the status for the current access procedure from the default unsuccessful status to successful (see "Transaction successful" in Fig. 19).

On the right side of Fig. 19, the success handling and a subsequent new initial access are illustrated. The successful performing of the access procedure with transaction ID = N corresponds to the bottom part of the left side of Fig. 19 and is not repeated here. Even if the reader performs another paging for the same access procedure (same transaction ID = N), the loT device skips a re-access, due to the previous successfully completed access procedure. Further, the loT reader eventually decides to perform a next access procedure with the loT device (e.g., a new transaction triggered by the core network) and pages they loT device with a new transaction ID = N+1. The loT device notices the new transaction ID and starts an initial access for the new access procedure.

The second implementation has the advantage that no dedicated timer is needed for failure handling, which facilitates reducing the loT device complexity. In this case, an already-existing operation cycle (e.g. the energy-saving cycle) can be re-used for the re-access control.

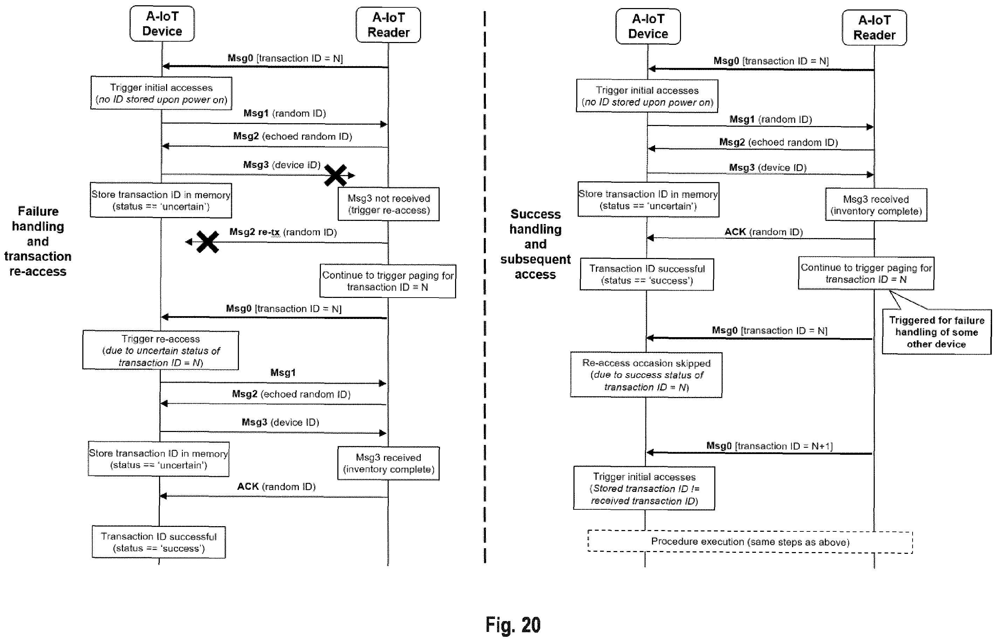

In **Fig. 20**, the above third implementation of the present First Solution is illustrated, according to which the loT device determines that the current access procedure is completed, when a paging message initiating a subsequent access procedure (e.g., with the new transaction ID) is received by the loT device. In an example, the reader can handle the improved loT access procedure such that a paging is controlled for a certain period of time before moving to the next transaction ID in sequence.

The third implementation does not have to maintain a dedicated timer as in the first implementation nor monitor an energy-saving cycle as in the second implementation. Rather, the loT device processes the positive feedback message transmitted by the reader as well as the subsequent paging messages transmitted by the reader in a sequence of transaction IDs.

In more detail, the loT device may set the default status of an initiated access procedure to unsuccessful (or uncertain). The loT device monitors for a positive feedback message as well as for a new paging message with a new transaction ID from the reader. If the loT device receives the positive feedback message from the reader, then the loT device can set the status of the current access procedure to successful, and can later skip paging attempts for the same (successful) access procedure (same transaction ID). The loT device may still respond to paging with a new transaction ID.

However, if the loT device does not receive the positive feedback message from the reader but first receives the paging message with the same transaction ID, the loT device will perform a re-access for said current access procedure. As a result, the loT behaviour is such that the loT device responds to all subsequent paging messages with the same transaction ID until the positive feedback message is received from the receiver.

Furthermore, if the loT device receives paging with a new transaction ID, the loT device starts a new access procedure for the new transaction ID, irrespectively of having received or not a previous positive feedback message for the previous transaction ID.

In an example of the third implementation, the reader may ensure that all the loT devices successfully complete the access procedure for one transaction ID, before moving to the next transaction ID. If the reader determines that all loT devices, triggered for a current transaction, successfully completed the access procedure, the reader may transmit a new paging message to the loT devices for the next transaction (new transaction ID). On the other hand, if the reader determines that not all loT devices successfully completed the access procedure, the reader may decide to transmit a paging message to trigger a re-access for the current transaction.

The transaction ID can be kept in association with the status of the current access procedure, in order to determine if the ongoing transaction has been successfully completed or not.

The present third implementation facilitates reducing the loT device complexity even further, compared to the first and second implementations. In particular, the loT device directly follows the messages transmitted from the reader and does not need to keep timers or to follow an energy-saving cycle.

The above-explained behaviour for the loT device and the reader of the third implementation are illustrated in Fig. 20. On the left side of Fig. 20, the failure handling and the subsequent re-access are illustrated. Accordingly, in Fig. 20, the Msg3 transmission from the loT device is performed by the loT device. It is assumed that the Msg3 transmission fails, such that the Msg3 does not reach the reader.

At this point, in one example, the status of the current access procedure is considered by the loT device to be uncertain (or unsuccessful).

As a further optional failure handling mechanism already explained above for the first implementation (see Fig. 18), the reader may transmit re-transmission requests to the loT device, e.g. for triggering the re-transmission of a failed D2R message, e.g. Msg3, by the loT device. However, in the present scenario of Fig. 20, it is assumed that also the re-transmission request message (see Msg2 re-tx) transmitted from the reader does not reach the loT device.

The loT reader decides to continue triggering the access procedure for the same transaction ID = N. The loT device performs a re-access for the current access procedure, because the status for this access procedure of transaction ID = N is not successful (here e.g. status is still uncertain). The re-access procedure is then completed successfully by the loT device and reader. As a result, the loT reader transmits the positive ACK message (see "ACK (random ID)" in Fig. 20) to the loT device. In response, the loT device stops the timer and changes the status for the current access procedure from the default unsuccessful status to successful (see "Transaction successful" in Fig. 20).

On the right side of Fig. 20, the success handling and a subsequent new initial access are illustrated. The successful performing of the access procedure with transaction ID = N corresponds to the bottom part of the left side of Fig. 20 and is not repeated here. Even if the reader performs another paging for the same access procedure (same transaction ID = N), the loT device skips a re-access, due to the previous successfully completed access procedure. Further, the loT reader eventually decides to perform a next access procedure with the loT device (e.g., a new transaction triggered by the core network) and pages the loT device with a new transaction ID = N+1. The loT device notices the new transaction ID and starts an initial access for the new access procedure.

### Second Solution

According to the Second Solution, the default status of the current access procedure is successful, and further, the status of the current access procedure is changed from the default status to the converse status being unsuccessful, based on a negative feedback message (e.g. NACK) from the reader.

Correspondingly, when the loT device receives another paging message for the current access procedure, a re-access for the current access procedure is not performed by the IoT device as long as the status remains the default successful status. On the other hand, in case the negative feedback message is received at the loT device, the default status successful is changed to unsuccessful. Therefore, in such a scenario, when the loT device receives another paging message for the current access procedure, a re-access for the current access procedure is indeed performed by the loT device, because the status was changed to unsuccessful after receiving the negative feedback. In a corresponding manner as explained above for the loT device, the reader is able to change the status of the current access procedure. In particular, the default status of the current access procedure is assumed to be successful, but can be changed by the reader to unsuccessful, when transmitting a negative feedback message to the loT device (e.g. a NACK).

This has the advantage that a negative feedback is only then transmitted by the reader, when a failure of the access procedure indeed occurs. It should be noted that the probability of failure in some loT scenarios is quite low, for instance because typically a short-range communication does not encounter many failures. Consequently, the number of negative feedback messages will be low as well, significantly less than the number of positive feedback messages (e.g., ACK) transmitted according to the above discussed First Solution. As a result, the Second Solution facilitates using significantly less R2D resources compared to the First Solution, thereby facilitating to increase resource utilization efficiency.

On the other hand, the Second Solution could be less reliable than the First Solution, because the default status is set as successful from the beginning and is only changed to unsuccessful in case the negative acknowledgment message reaches the loT device. Put differently, in case the access procedure does not complete successfully but the negative acknowledgment message from the reader does not reach the loT device, the loT device incorrectly considers the access procedure to be successful, according to the previously-set default status.

According to example implementations of the Second Solution, the negative feedback message negatively acknowledges the receipt of a message of the current access procedure. In one example, the negative feedback message is a negative acknowledgement message (NACK) received from the reader for a previous message transmitted by the loT device. The negative feedback message informs that the access procedure has failed, i.e., was not successfully completed.

The reader detects the failure of the access procedure (e.g. failure of a D2R transmission), e.g. due to bad channel or other failures, and sends an explicit negative feedback to the loT device. The loT device determines the failure of the access procedure, when the negative feedback message is received.

In general, the access procedure can be considered to not be successfully completed, when the loT device (and reader) fail to perform a step of the access procedure. For instance, the access procedure may comprise only inventory (Step B of Fig. 8) or inventory and command (Steps B and C of Fig. 8). In case the D2R data transmission of Step B2 (see Fig. 8) is not successfully transmitted to the reader, the reader detects this failure and transmits the negative acknowledgment message to the loT device. Similarly, in case the D2R transmission of step C2 (see Fig. 8) is not successfully transmitted to the reader, the reader is again able to detect such a failure and transmits the negative management message to the loT device. In any case, the reader that is able to inform the loT device on the failure of the current transaction.

According to one exemplary implementation, the negative feedback message includes an ID of the loT device, such that the loT device is able to correctly identify that the negative feedback message relates to the access procedure currently performed by the loT device with the reader. For instance, the ID of the loT device could be the random ID (see e.g. Msg1 of Step B1 of Fig. 8), the device ID or the AS ID (see e.g. Msg3 of Step B2 of Fig. 8).

In addition or alternatively to including the ID of the loT device, the negative acknowledgement message is received in the same time resources and/or frequency resources of a subsequent time slot reserved for the loT device for transmitting or receiving a previous message of the current access procedure (e.g., time/frequency resources reserved for transmitting the Msg1 of the random-access or for receiving the paging message Msg0).. By re-using such time/frequency resources reserved for the loT device, the loT device may also determine that the negative feedback message indeed relates to the access procedure currently performed by the loT device with the reader.

As already explained in connection with the First Solution, access procedures can be identified and thus differentiated by transaction IDs. Furthermore, the improved access procedure may also distinguish between different readers, e.g. in multi-reader scenarios. The above concepts of the First Solution apply correspondingly also to the Second Solution. Thus, the loT device can thus distinguish between different readers and properly perform an initial access and a re-access for different access procedures from different readers.

The paging messages according to the Second Solution transmitted by the reader may include a transaction ID (and possibly a reader ID) for the access procedure. The loT device determines that a paging message is directed to a same access procedure, in case the transaction ID (and possibly the reader ID) in the received paging message is the same as the corresponding transaction ID (and reader ID) stored for the current access procedure.

Further, in the same manner as for the above described First Solution, the loT device keeps track of the transaction ID as long as necessary to be able to correctly perform or skip re-access for a current access procedure with the same transaction ID. For instance, the loT device may store the transaction ID for the current access procedure when the status is successful. If the new received paging message is directed to the same access procedure (i.e., same transaction ID) and the status of the current access procedure is successful, the re-access can be skipped by the loT device (in other words, the re-access trigger can be ignored). Conversely, if the new received paging message is directed to a different access procedure (i.e., different transaction ID), the loT device proceeds to perform a new initial access for the new access procedure (for the new transaction).

In a further example implementation of the Second Solution, the transaction ID need not be stored by the loT device for the current access procedure when the status of the current access procedure is unsuccessful. The loT device determines that a paging message is directed to a new access procedure when there is no available transaction ID in the loT device to which the transaction ID of a received paging message can be compared.

As explained in the present Second Solution, the status of the current access procedure is used by the loT device to determine whether to perform or skip a re-access for a current access procedure. In exemplary implementations, the status of the current access procedure is stored by the loT device, e.g. in association with the transaction ID of the current access procedure as discussed already above.

In one example, the default status assigned at the beginning by the loT device can be stored accordingly; alternatively, the default status need not be not stored as such, rather the loT device determines the default status for the current access procedure in the absence of the available status (e.g. stored before by the loT device).

In the same corresponding manner as described for the above First Solution, the status can be e.g. a 1-bit value or 2 bits. Details are provided in the description of the First Solution and are not repeated here.

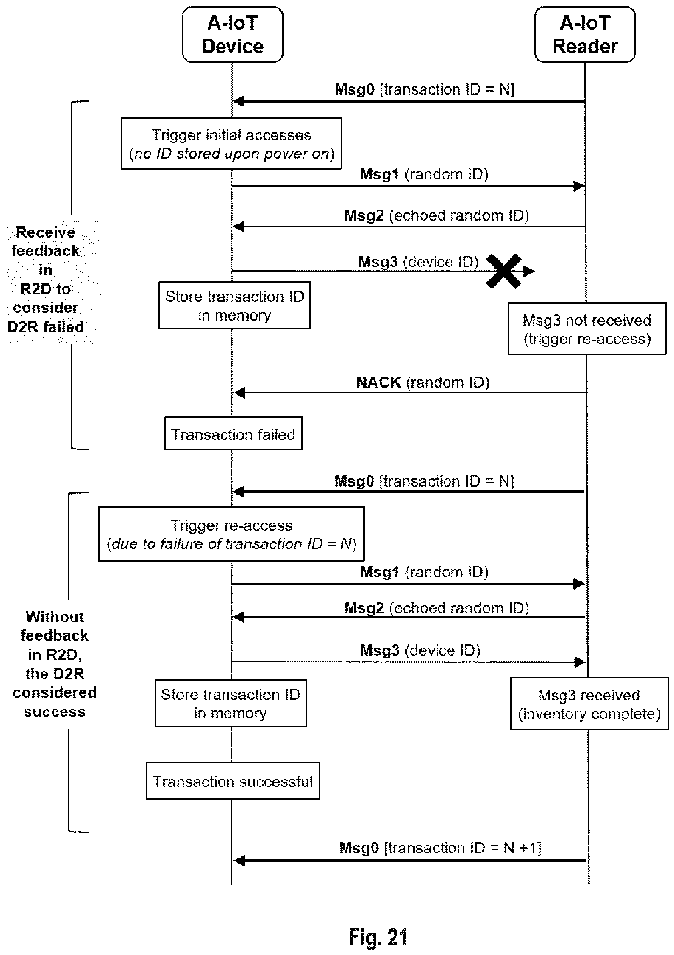

An exemplary implementation of the Second Solution will be explained in connection with **Fig. 21**. Here, the same exemplary assumptions are made as for Fig. 17 regarding the First Solution. In particular, the access procedure is only for inventory, and the loT device has just powered on and thus has no previous transaction ID stored.

As apparent from Fig. 21, the loT reader transmits a paging message for the access procedure with a transaction ID = N, which triggers an initial access at the loT device, including performing the random access of Step B1, and the D2R data transmission of Step B2. Although not illustrated, a default status of successful is defined for the thus started access procedure. The transaction ID is stored in the loT device according to this example.

It is further assumed that the loT reader does not receive Msg3 of Step B2, and thus transmits a negative acknowledgment message to the loT device, so as to enable re-access by the loT device at a later time. Therefore, due to the negative feedback, the loT device changes the status of the current access procedure, from the default status to unsuccessful (see "Transaction failed" in the figure).

It is then further assumed that the reader transmits another paging message for the same transaction of transaction ID = N, e.g. at least in order to trigger re-access for said loT device. In response to this new paging message with the same transaction ID = N, the loT device performs a re-access, because the status for this transaction ID was changed to unsuccessful. During the re-access, the loT device again performs the same steps as performed before for the initial access. Differently, however, the Msg3 is correctly received by the reader, which thus successfully completes the inventory operation. No negative acknowledgment is transmitted by the reader to the loT device. Correspondingly, the status of the current access procedure (with transaction ID = N) is maintained as the default status = successful (see "Transaction successful" in Fig. 21).

Eventually, the reader might initiate the next transaction with the transaction ID = N+1 and thus transmits another paging message to the loT device(s). The loT device will respond to the paging by performing another access procedure following the above discussed principles.

As explained in the present Second Solution, the default status of the current access procedure can be changed by the loT device when receiving a negative feedback message. In further exemplarily implementations, the duration during which the loT device waits for the negative feedback message can be limited. In other words, at some point the loT device determines that the current access procedure is completed, irrespectively of whether the access procedure is completed successfully or without success. There are different implementations on how the loT device determines the completion of the current access procedure, which are conceptually the same as explained above already for the First Solution.

In detail, according to a first implementation, the loT device determines that the current access procedure is completed, when an access status timer for the current access procedure expires.

According to a second implementation, the loT device determines that the current access procedure is completed, when an energy-off state of an energy-saving cycle starts.

According to a third implementation, the loT device determines that the current access procedure is completed, when a paging message initiating a subsequent access procedure is received by the loT device.

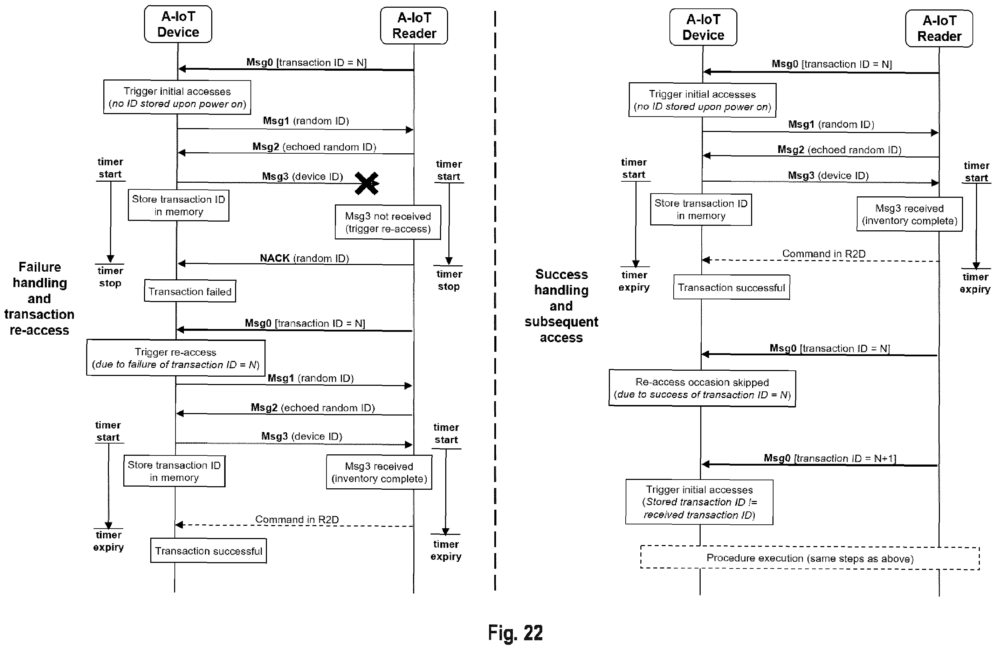

The above first, second and third implementations of the Second Solution will be explained in the following in more detail with reference to Fig. 22, 23, and 24, respectively.

The reader may determine whether the current access procedure is completed, and a corresponding manner to the loT device behavior, e.g. based on the above first, second, and third implementations.

Correspondingly, upon determining that the current access procedure is completed, the loT device may stop monitoring for the negative feedback message from the reader regarding the current access procedure. Furthermore, upon determining that the current access procedure is completed, the loT device may consider the status of the access procedure as final, and no (further) change is to be expected.

According to another example, the loT device may assume a default state of uncertain for the current access procedure at the beginning, particularly in the absence of a negative feedback message. Then, upon determining that the current access procedure is completed, the loT device can change the status of the current access procedure from uncertain to the default state of successful.

In **Fig. 22**, the above first implementation of the present Second Solution is illustrated, according to which the loT device determines that the current access procedure is completed, when an access status timer for the current access procedure expires. Accordingly, a separate timer is configured for loT devices to wait for the negative feedback message from the reader. The access status timer is operated at the loT device and the reader in a corresponding manner.

In one example, the timer is started when the loT device performs the D2R data transmission (e.g. Msg3). Alternatively (not shown in the figure), the timer is started when the loT device receives the R2D transmission triggering the D2R data transmission, e.g. when the loT device receives the Msg2 of the random access. The timer is stopped when receiving the negative feedback message, e.g. when receiving the negative acknowledgment (ACK). Upon the expiry of the timer, the current status (e.g. default status) of the access procedure is to be considered final.

The feedback duration can be controlled (or pre-determined) by the reader for sending a negative feedback message to the loT devices. Thus, correspondingly to the First solution, this allows the advantage that re-access occasions for the same transaction ID can be planned and scheduled efficiently in R2D by the reader.

In some variants of said first implementation (see e.g. Fig. 22), the memory handling of the transaction ID follows the timer events monitored by the loT device. This is conceptually quite similar to the memory handling for the First Solution (see above description). In particular, if the negative feedback message is not received before the time expiry, the transaction ID is stored for the successful access procedure so as to be used for the next paging occasion. Thus, a subsequent paging with the same transaction ID as stored can be skipped.

If the negative feedback message is received from the reader before the timer expiry, then, in one example, the transaction ID can be deleted from the memory of the loT device. Thus, a subsequent paging with any transaction ID triggers the loT device to perform an access procedure, e.g. a re-access for the current access procedure or an initial access for another access procedure. In an alternative variant, the transaction ID is not deleted but kept stored in the loT device, and the available transaction ID can be compared with a transaction ID in a subsequent paging.

In example variants of this first implementation (see e.g. Fig. 22), the status can be set as a default not to successful but to uncertain, and is then changed to successful when the access timer expires. On the other hand, if the negative feedback message is received before timer expiry, the status for the current access procedure is changed to unsuccessful. The loT device correspondingly follows the status when receiving new paging messages, and further takes into account the received transaction ID in the paging message. In detail, re-access is performed by the loT device, in case the received transaction ID of the paging is the same as the available transaction ID and in case the corresponding status is unsuccessful (or uncertain). On the other hand, a re-access is skipped, in case the received transaction ID of the paging is the same as the available transaction ID and in case the corresponding status is successful. Further, a new initial access is performed if the received transaction ID of the paging is different from the available transaction ID (irrespective of the status for the previous access procedure).

The above-explained behaviour for the loT device and the reader of the first implementation are illustrated in Fig. 22 On the left side of Fig. 22, the failure handling and the subsequent re-access are illustrated. Accordingly, in Fig. 22, the Msg3 transmission from the loT device is performed by the loT device. The loT device and the reader start the timer at about the same time, at the time of transmitting the Msg3. However, in the present scenario of Fig. 22, the Msg3 transmission does not reach the loT reader. Correspondingly, the reader transmits the negative acknowledgement message (see NACK (random ID)) to the loT device. In response, the loT device stops the timer and changes the status for the current access procedure from the default successful status to unsuccessful (see "Transaction failed" in Fig. 22).

At this point, the access procedure can be considered to be finished, albeit without success. Therefore, the loT reader decides to trigger re-access at the loT device by transmitting another paging message to the loT device for the same access procedure, for the same transaction with transaction ID = N. The loT device performs a re-access for the current access procedure, because the status for this access procedure of transaction ID = N is unsuccessful. The re-access procedure is then completed successfully by the loT device and reader. As a result, no negative acknowledgement message is transmitted by the loT reader, and the loT device maintains the default status as successful, particularly after expiry of the access timer.

Fig. 22 illustrates an optional (dashed arrow) Command in R2D, which could be transmitted by the reader in case the command-response operation of Step C is to be performed as well.

On the right side of Fig. 22, the success handling and a subsequent new initial access are illustrated. The successful performing of the access procedure with transaction ID = N corresponds to the bottom part of the left side of Fig. 22 and is not repeated here. Even if the reader performs another paging for the same access procedure (same transaction ID = N), the loT device skips a re-access, due to the previous successfully completed access procedure. Further, the reader eventually decides to perform a next access procedure with the loT device and pages the loT device with a new transaction ID = N+1. The loT device notices the new transaction ID and starts an initial access for the new access procedure.

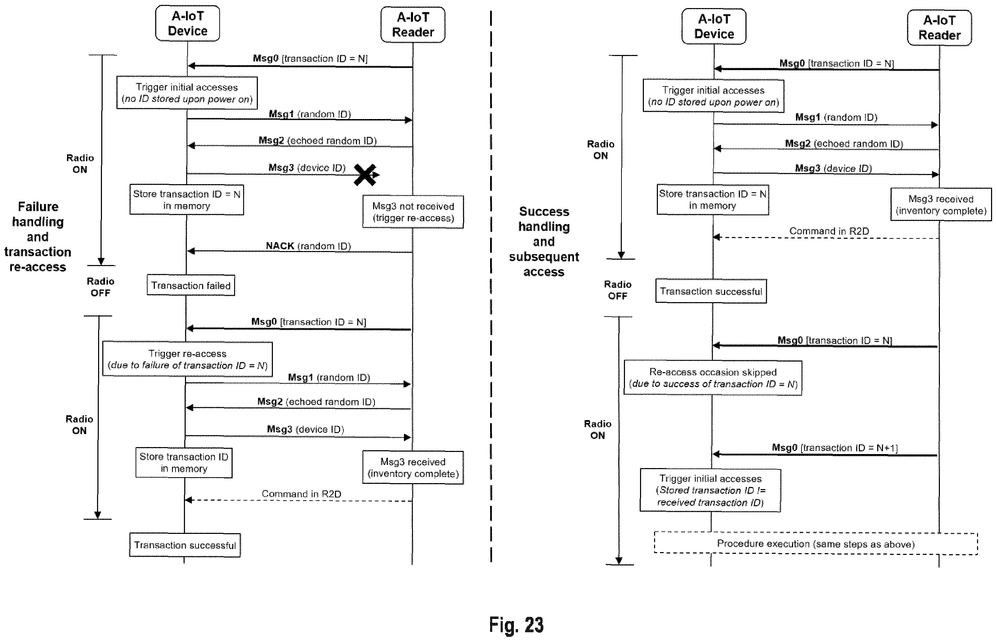

In **Fig. 23**, the above second implementation of the present Second Solution is illustrated, according to which the loT device determines that the current access procedure is completed, when an energy-off state of an energy-saving cycle starts.

As correspondingly explained above for second implementation of the First Solution, the energy-saving cycle can be determined based on an energy level of the loT device and/or based on one or more timer to control switching between energy-on and energy-off states. The details on defining the energy-saving cycle based on the energy level and/or timer explained correspondingly for the First Solution, apply in the same manner for the present Second Solution. Thus, the radio of the loT device is kept active during the energy-on state (or when enough energy is available). In one example, the loT device may only expect the negative feedback message from the reader during the energy-on state.

Correspondingly, the reader intends to transmit the negative feedback message during the energy-on state of the loT device. If the loT device receives the negative feedback message during the energy-on state, the loT device can set the status of the current access procedure to unsuccessful and can be triggered by the reader for a re-access in later paging occasions. Correspondingly, the loT device will perform a re-access if so triggered by the reader when receiving another paging for the same transaction ID.

On the other hand, if the loT device does not receive the negative feedback message during the energy-on state, the loT device enters the energy-off state and considers the default status of successful to be final for the current access procedure. The loT device will later skip paging attempts for the same (successful) access procedure, having the same transaction ID.

The memory handling for the second implementation of the present Second Solution is quite similar to the memory handling explained above for the first implementation (see e.g. Fig. 22). In one example, the loT device retains the contents of a (volatile) memory to be used during the next energy-saving cycle. Here it is exemplarily assumed that the loT devices can be defined with a suitable low-energy threshold to switch to the energy-off state and not drain its energy completely, such that the available energy is sufficient to drive the memory unit and hence retain the transaction ID stored therein at least until the next paging occasion.

For instance, if the negative feedback message is received from the reader during the energy-on state, then, in one example, the transaction ID can be erased from the loT device. Thus, a subsequent paging with any transaction ID triggers the loT device to perform and access procedure, e.g. a re-access for the current access procedure or an initial access for another access procedure. In an alternative variant, the transaction ID is not deleted but can be kept stored in the loT device, and the available transaction ID can be compared with a transaction ID in a subsequent paging.

If the negative feedback message is not received from the reader during the energy-on state, the status remains the default successful, and the transaction ID for the successful access procedure is stored so as to be used for the next paging occasion. Thus, a subsequent paging with the same transaction ID as stored can be skipped, and the loT device would then perform the next access procedure for a new transaction ID.

In example variants of this second implementation (see e.g. Fig. 23), the status can be set as a default not to successful but to uncertain, and is then changed to successful when the energy-off state is entered. On the other hand, if the negative feedback message is received during the energy-on state, the status for the current access procedure is changed from uncertain to unsuccessful. The loT device correspondingly follows the status when receiving new paging messages, and further takes into account the received transaction ID in the paging message. In detail, re-access is performed by the loT device, in case the received transaction ID of the paging is the same as the available transaction ID and in case the corresponding status is unsuccessful (or uncertain). On the other hand, a re-access is skipped, in case the received transaction ID of the paging is the same as the available transaction ID and in case the corresponding status is successful. Further, a new initial access is performed if the received transaction ID of the paging is different from the available transaction ID (irrespective of the status for the previous access procedure).

The above-explained behaviour for the loT device and the reader of the second implementation are illustrated in Fig. 23. On the left side of Fig. 23, the failure handling and the subsequent re-access are illustrated. The loT device and the reader know about the energy-saving cycle, e.g. as explained above for the second implementation of the First Solution. In Fig. 23, the Msg3 transmission from the loT device is performed by the loT device. It is assumed that the Msg3 transmission fails, such that the Msg3 does not reach the reader.

Correspondingly, the reader transmits the negative acknowledgement message (see NACK (random ID)) to the loT device. In response, the loT device changes the status for the current access procedure from the default successful status to unsuccessful (see "Transaction failed" in Fig. 23).

At this point, when entering the energy-off state (see "Radio off" in figure) or at the end of the energy-off state, the access procedure can be considered to be finished, albeit without success.

Therefore, the loT reader decides to trigger re-access at the loT device by transmitting another paging message to the loT device for the same access procedure, with transaction ID = N. The loT device performs a re-access for the current access procedure, because the status for this access procedure of transaction ID = N is unsuccessful. The re-access procedure is then completed successfully by the loT device and reader. As a result, no negative acknowledgement message is transmitted by the loT reader, and the loT device maintains the default status as successful, particularly after the loT device enters the energy-off state.

On the right side of Fig. 23, the success handling and subsequent new initial access are illustrated. The successful performing of the access procedure with transaction ID = N corresponds to the bottom part of the left side of Fig. 23 and is not repeated here. Even if the reader performs another paging for the same access procedure (same transaction ID = N), the loT device skips a re-access, due to the previous successfully completed access procedure. Further, the loT reader may eventually decide to perform a next access procedure with the loT device and pages the loT device with a new transaction ID = N+1. The loT device notices the new transaction ID and starts an initial access for the new access procedure.

The second implementation has the advantage that no dedicated timer is needed for failure handling, which facilitates reducing the loT device complexity. In this case, an already-existing operation cycle (e.g. the energy-saving cycle) can be re-used for the re-access control.

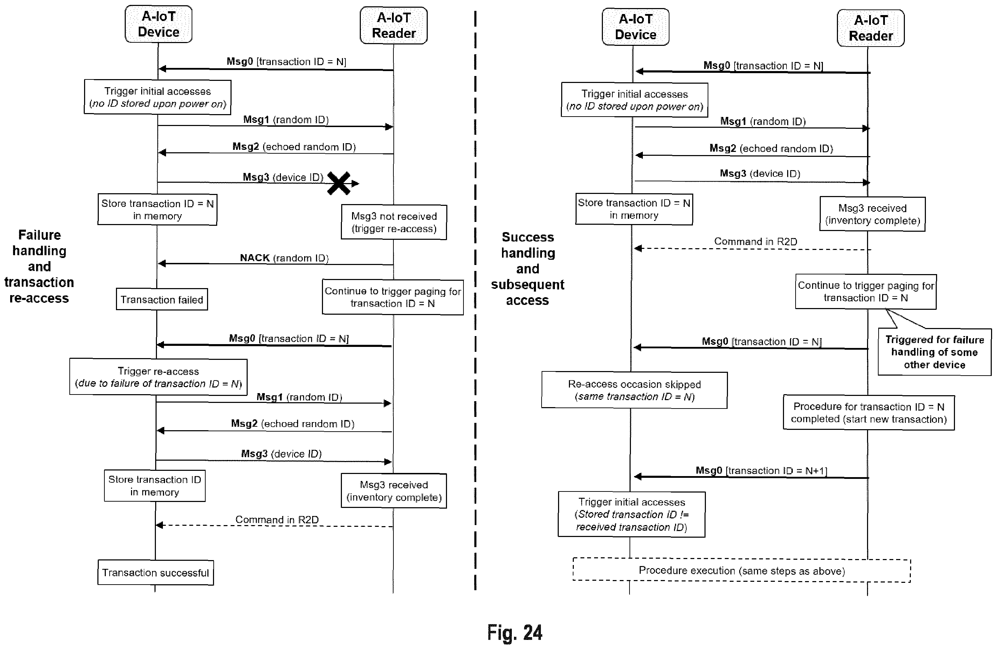

In **Fig. 24**, the above third implementation of the present Second Solution is illustrated, according to which the loT device determines that the current access procedure is completed, when a paging message initiating a subsequent access procedure (e.g., with a new transaction ID) is received by the loT device. In an example, the reader can handle the improved loT access procedure such that a paging is controlled for a certain period of time before moving to the next transaction ID in a sequence of transaction IDs.

The third implementation does not have to maintain a dedicated timer as in the first implementation nor monitor an energy-saving cycle as in the second implementation. Rather, the loT device processes the negative feedback message transmitted by the reader as well as the subsequent paging messages transmitted by the reader in sequence.

In more detail, the loT device may set the default status of an initiated access procedure to successful (or uncertain). The loT device monitors for a negative feedback message as well as for a new paging message with a new transaction ID from the reader. If the loT device receives the negative feedback message from the reader, then the loT device can set the status of the current access procedure to unsuccessful, and the loT device will perform a re-access for said current access procedure if triggered in future paging occasions.

However, if the loT device does not receive the negative feedback message from the reader but first receives the paging message with the same transaction ID, the loT device will skip re-access for the same (successful) access procedure (with same transaction ID).

The loT device may thus still respond to paging with a new transaction ID. If the loT device receives paging with a new transaction ID, the loT device starts a new access procedure for the new transaction ID, irrespectively of having received or not a previous negative feedback message for the previous transaction ID.

In an example of the third implementation, as explained already for the third implementation of the First Solution, the reader may ensure that all the loT devices successfully complete the access procedure for one transaction ID, before moving to the next transaction ID.

As an optional variant, if the reader detects a failure in the access procedure (e.g., Msg3 failure), the reader may transmit re-transmission requests to the loT device, e.g. for triggering the re-transmission of a D2R message, e.g. Msg3, by the loT device.

The transaction ID can be kept in association with the status of the current access procedure, in order to determine if the ongoing transaction has been successfully completed or not.

The present third implementation facilitates reducing the loT device complexity even further, compared to the first and second implementations. In particular, the loT device directly follows the messages transmitted from the reader and does not need to keep timers or follow an energy-saving cycle.

The above-explained behaviour for the loT device and the reader of the third implementation are illustrated in Fig. 24. On the left side of Fig. 24, the failure handling and the subsequent re-access are illustrated. Accordingly, in Fig. 24, the Msg3 transmission from the loT device is performed by the loT device. It is assumed that the Msg3 transmission fails, such that the Msg3 does not reach the reader.

At this point, in one example, the status of the current access procedure is considered by the out to devise to be successful (or uncertain).The reader transmits a negative feedback message (NACK) to the loT device, and the loT device in response changes the status from successful (or uncertain) to unsuccessful.

The loT reader decides to continue triggering the access procedure for the same transaction ID = N. The loT device performs a re-access for the current access procedure, because the status for this access procedure of transaction ID = N is not successful (here e.g. status is unsuccessful). The re-access procedure is then completed successfully by the loT device and reader.

On the right side of Fig. 24, the success handling and a subsequent new initial access are illustrated. The successful performing of the access procedure with transaction ID = N corresponds to the bottom part of the left side of Fig. 24 and is not repeated here. Even if the reader performs another paging for the same access procedure (same transaction ID = N), the loT device skips a re-access, due to the previous successfully completed access procedure. Further, the loT reader eventually decides to perform a next access procedure with the loT device and pages the loT device with a new transaction ID = N+1. The loT device notices the new transaction ID and starts an initial access for the new access procedure.

### Third Solution

According to the Third Solution, the default status is kept as successful during a current energy-saving cycle. In other words, in one energy-saving cycle, only one access procedure can be triggered. The default status for the current access procedure is kept successful during the complete current energy-saving cycle. A different expression instead of the energy-saving cycle can be, e.g. a Discontinued Reception, DRX, cycle.

Consequently, the loT device does not respond to any further paging message received from the reader during the current energy-saving cycle, be it for the same transaction ID or even another (e.g. next) transaction ID. The loT device is not expected to respond again to any further paging message, until the loT device enters the next energy-saving cycle (e.g., enters a next energy-on state after having switched to an energy-off state).

In a corresponding manner as explained above for the loT device, the reader is able keep the default status as successful during the current energy-saving cycle of the loT device.

The reader is aware of this loT behaviour, and thus the reader can use subsequent paging messages in said current energy-saving cycle of the one loT device for triggering access or re-access for other loT devices (e.g., having a shifted energy-saving cycle). Accordingly, the reader determines the timing for transmitting a paging message to the loT device for triggering an initial access or a re-access of an access procedure, based on the current energy-saving cycle and based on that the default status is kept by the loT device for an access procedure as successful during a complete energy-saving cycle.

In accordance with the present Third Solution, the loT device determines to skip performing an access procedure in response to the paging message, in case a previous paging message already initiated a previous access procedure during the current energy-saving cycle. Here, for instance, the current energy-saving cycle means the energy-saving cycle at the time of receiving the new paging message.

In one example, an energy-saving cycle can be defined to start with an energy-on time period, followed by an energy-off time period, wherein the next energy-saving cycle would start with the next energy-on time period, and so on. The loT device might or might not be required to monitor for paging messages, even during the energy-off time periods.

In another example, the energy-saving cycle can be defined to be one energy-on time period, while the subsequent energy-off time period, while existent, is not counted, e.g. because the loT device might not be required to monitor for a paging message during the energy-off time periods.

In one example implementation of the Third Solution, the energy-saving cycle can be determined based on an energy level of the loT device and/or based on one or more timer to control switching between energy-on and energy-off states. In one example, the loT device is in an energy-on state (energy-on time period) in case the energy level is above a first energy threshold, and is in an energy-off state (energy-off time period) in case the energy level is below a second energy threshold. In one example, the first and second energy thresholds can be the same.

The energy-saving cycle allows the loT device to stay active (e.g., Radio ON) during the energy-on state, and to switch to a low-power energy-off state (e.g., Radio OFF) so as to facilitate conserving energy and recharging energy for the next energy-on state. If the energy-saving cycle is specified based on the energy harvesting, then, depending on the energy availability at each loT device, the duration during which the loT device remains in the active in the energy-on state and the time required to harvest energy in the energy-off state will likely be asynchronous from one loT device to another loT device. This asynchronous behaviour of the loT devices has the potential advantaged that it can be used to perform failure handling during the paging procedure.

In case a timer is used for the energy-saving cycle, said timer defines alternating time periods during which the loT device is in an energy-off state and in an energy-on state. In one example, the time periods can be of different time lengths. According to such a behaviour, the timer start and stop between different loT devices can be relatively asynchronous as well, and the same advantage for failure handling can be achieved, when timers control the energy-saving cycle.

In another implementation, both the timer and the energy level can be used to define the energy-saving cycle, where in one example the timer defines a minimum energy-on time period and a maximum energy-off time period. Furthermore, the loT device may for instance enter the energy-off state at a later point of time, in case there is enough energy left. Such a combined definition of the energy-saving cycle allows flexibility for the energy saving and harvesting, while at the same time increasing the predictability (e.g., at the reader) of the time periods during which the loT device will be in the energy-on state for exchanging (receiving and transmitting messages) with the reader (e.g. paging message, random access, etc.).

As explained above for the First and Second Solutions, access procedures could be identified and thus differentiated by transaction IDs. One example implementation of the Third Solution also makes use of the transactions IDs for differentiating between different access procedures, in a corresponding manner as described above for the First and Second Solutions (see above description). Correspondingly, the transaction ID can be included in the paging message transmitted by the reader, and the loT devices may store the transaction ID for the current access procedure (e.g. when the status is successful), so as to be able to skip next paging for the same transaction ID. The loT device may further delete the transaction ID or keep same stored when the loT device enters the energy-off state.

However, for the present Third Solution, the use of transaction IDs is not strictly necessary. Rather, the loT device may even be allowed to power off the (volatile) memory, such that any data, such as the transaction ID, stored therein is lost. In detail, the loT device reacts to any paging message that is received first during an energy-saving cycle irrespective of the transaction ID of the paging. Similarly, the loT device ignores and skips any further paging message that is received subsequently to the first paging message, during the same energy-saving cycle, irrespective of the transaction ID of the paging. Moreover, the paging message need not include the transaction ID; the presence of the transaction ID in the paging message can thus be considered optional.

Re-access for a failed access procedure can still be triggered by the reader, however not during the same energy-saving cycle but only during the next or any subsequent energy-saving cycle.

In one example implementation of the Third Solution, the reader triggers re-access during subsequent energy-saving cycles until all loT devices have successfully completed the access procedure for the current transaction (e.g., transaction ID = N) and only then proceeds to the subsequent transaction (e.g., transactions ID = N+1).

As a further optional failure handling mechanism, the reader may transmit re-transmission requests to the loT device, preferably during the energy-on time period, e.g. for triggering the re-transmission of a failed D2R message, e.g. Msg3, by the loT device. The re-transmission requests can be transmitted by the reader for handling failures during the same current energy-saving cycle, thereby facilitating to avoid that the loT device needs to perform a re-access. The loT device monitors and receives such re-transmission requests and in response re-transmits the requested D2R message to the reader. In one example, the re-transmission request message includes an ID of the loT device, such that the loT device is able to correctly identify that the re-transmission request relates to the access procedure currently performed by the loT device with the reader. For instance, the ID of the loT device could be the random ID (see e.g. Msg1 of Step B1 of Fig. 8), the device ID or the AS ID (see e.g. Msg3 of Step B2 of Fig. 8).

The First and Second Solutions were operated according to a status of the current access procedure and according to feedback messages to change the status when needed. The present Third Solution however does not require feedback messages, such as the ACK or NACK of the First respectively Second Solutions, because the status of the current access procedure need not be changed. In the present Third Solution, the current access procedure can be generally considered to be successful from the loT device perspective during one and the same energy-saving cycle. Furthermore, the status of the access procedure need not be kept available for the next energy-saving cycle, because the loT device will start an access procedure in response to any paging message (irrespective of whether the paging is for the same transaction).

The Third Solution has the advantage that the device complexity is significantly reduced, compared to the First and Second Solutions, because no timer, no feedback messages, no status updates, and no comparison of transaction IDs are necessary. Further, since the Third Solution is able to operate without a transaction ID, there is also no need to store the transaction IDs in a volatile memory of the loT device, and the reader does not need to transmit the transaction ID in the paging messages. The operating power consumption of the loT device can thus be further reduced, which increases the energy efficiency compared to other methods. Re-access is however only possible in the next energy-saving cycle, which might introduce a time delay for successfully completing the access procedure.

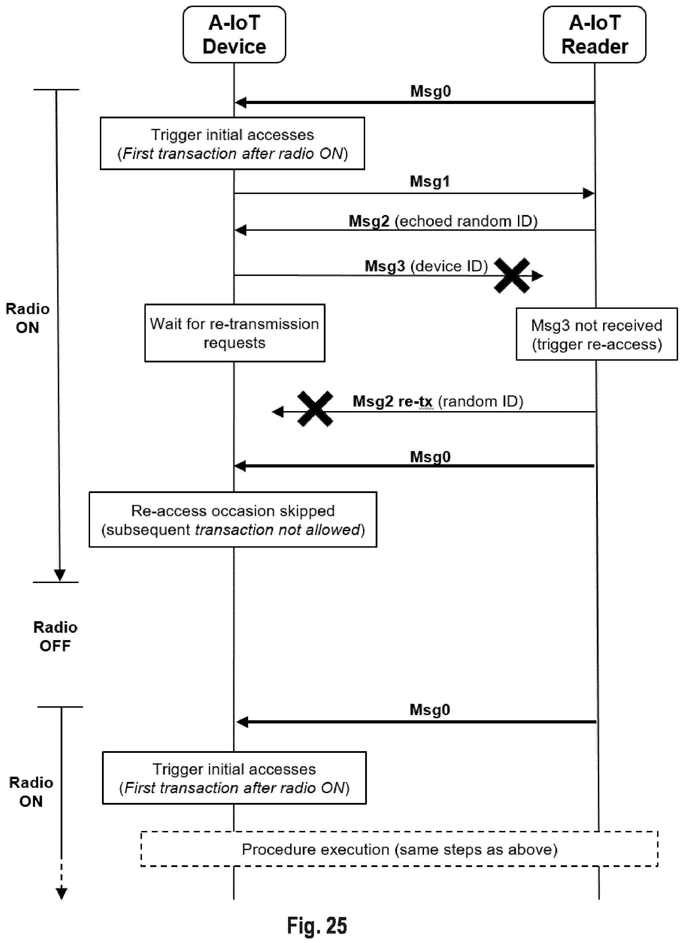

The above-explained behaviour for the loT device and the reader of the Third Solution are illustrated in **Fig. 25**. The energy-saving cycle with one Radio ON and one Radio off time periods is illustrated in the figure. The reader transmits a paging message to the loT device. Since the paging is the first one during the present energy-saving cycle, the loT device proceeds to perform an initial access procedure. As explained in the context of Fig. 8, e.g. the loT device performs the random access of Step B1, and performs the D2R data transmission of Step B2 (see Msg3 (device ID)). It is further assumed that the loT reader does not receive Msg3 of Step B2, and thus intends to trigger re-access at a later occasion (here, during the next energy-saving cycle). Furthermore, according to the solution of Fig. 25, the reader attempts to handle the failure by sending a re-transmission request to the loT device for triggering the re-transmission of the failed Msg3. However, it is assumed herein that also the re-transmission request message (see Msg2 re-tx) transmitted from the reader does not reach the loT device, such that the loT device is not able to successfully complete the access procedure during the current energy saving cycle.

As illustrated, even if the reader transmits another paging message (Msg0), the loT device will not perform re-access during the current energy-saving cycle, according to the Third Solution.

The loT device will respond to another paging only after entering the next energy-saving cycle, specifically after entering first the energy-off time period (Radio OFF) and then entering the next energy-on time period (Radio ON). As apparent from Fig. 25, the last illustrated paging message Msg0 triggers another (initial) access at the loT device, because it is the first paging for the new energy-saving cycle, after Radio ON is entered.

In the above explanations of the Third Solution, it was described that the paging message Msg0 is received by the loT device during the energy-on state. This is however not strictly necessary, and the paging message Msg0 can additionally be received by the loT device during the energy-off state. In said case, however, the loT device may wait to start the access procedure until it is in the energy-on state.

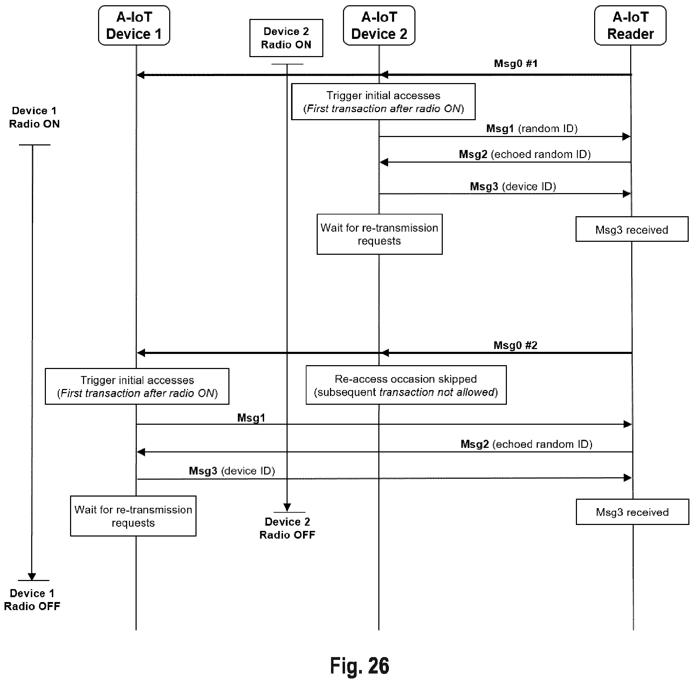

**Fig. 26** also illustrates the Third Solution, however the context of two loT devices, which have shifted energy-saving cycles. As apparent therefrom, while the first paging message Msg0 #1 triggers an initial access for the loT device 2 (see also Fig. 25), it is not received or at least not processed by loT device 1, because it is received during the energy-off period of loT device 1.

Furthermore, the second paging message Msg0 #2 is received by both loT devices 1 and 2. However, in response to this second paging message Msg0 #2, the loT device 2 will not perform re-access during the current energy-saving cycle, according to the Third Solution, because it already performed an access procedure in response to the previous paging with Msg0 #1. On the other hand, the second paging message Msg0 #2 is the first paging during the current energy-saving cycle from the perspective of loT device 1. Thus, Msg0 #2 triggers an initial access procedure at loT device 1.

### Fourth Solution

In the above, different solutions and implementations thereof were described on how to perform an access procedure and how to handle failures during the access procedure. There are different types of access procedures, at least two types of procedures such as "inventory only" and "inventory and command" as discussed above, e.g. in connection with Fig. 8. Accordingly, the access procedures may include different parts, e.g. including an inventory operation (see Step B of Fig. 8) and optionally including a command-response operation (see Step C of Fig. 8).

Failures may occur at different times of the access procedures, e.g. during the inventory operation or the command-response operation. Furthermore, the probability of failures may differ between different operations of the access procedure. For instance, there is higher probability that a failure occurs during the inventory operation than during the command-response operation. In particular, failures majorly occur before the first connection in R2D and D2R is established, e.g., in case of CBRA, there could be many failure scenarios one of which is causing collision in Msg1 or Msg3 sent in D2R due to contention among devices (see e.g. Fig. 8). On the other hand, for later transmissions during the command-response operation, the probability of error cases can be low. Consequently, for failures that occur with a higher probability, a reliable solution might be preferably adopted, such as the First Solution.

Moreover, for some applications, the reliability for executing command operations and ensuring the loT devices complete certain operations before the device drains its available energy or goes into an energy-saving off state could be important. In such scenarios, it might be also beneficial to adopt a solution ensuring a high reliability, such as the First Solution.

Since loT device can detect the failure cases better than the reader, it is beneficial to adopt the First Solution until Step B. And once the first connection is established in step B, the probability of failures could be less or tolerable while executing step C of the access procedure. So, it might be sufficient to support a low-reliability solution in step C such as the Second Solution or the Third Solution, which allows gaining efficiency from other benefits (e.g., low complexity or less overhead), In a contention-based paging, the triggered devices perform access and re-access attempts before receiving Msg2 (sent for the purpose of resolving contention of each device). Once the contention is resolved, the failure cases seen between reader and the loT device could be very few. And hence it might be sufficient to support a low-reliability solution, such as the Third Solution, for step B, while supporting other solutions for step C.

Another major concern is device complexity, and the different solutions and implementations presented above allow different levels of device complexity. For instance, the Second and Third Solutions allow providing a low-complexity device. Thus, a solution with low complexity, such as the Third Solution, can be adopted for solving failures in one or both of the inventory operation (Step B) and the command-response operation (Step C).

The following table provides a combination of how the various solutions can be combined for the two different operations of the access procedure, particularly the inventory operation of Step B and the command-response operation of Step C.

| **Options** | **Re-access procedure for inventory (step B)** | **Re-access procedure for command (step C)** |
|---|---|---|
| Option 1 | First Solution | First Solution |
| Option 2 | First Solution | Second Solution |
| Option 3 | First Solution | Third Solution |
| Option 4 | Second Solution | First Solution |
| Option 5 | Second Solution | Second Solution |
| Option 6 | Second Solution | Third Solution |
| Option 7 | Third Solution | First Solution |
| Option 8 | Third Solution | Second Solution |
| Option 9 | Third Solution | Third Solution |

As apparent from the above, depending on the circumstances and the intended benefits, different solutions and implementations can be adopted for the inventory operation of Step B and the command-response operation of Step C of the access procedure.

### Further Implementation Details

### RRC connection setup and reconfiguration procedures

Interactions between a UE, gNB, and AMF (a 5GC entity) in the context of a transition of the UE from RRC_IDLE to RRC_CONNECTED for the NAS (Non-Access Stratum) part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

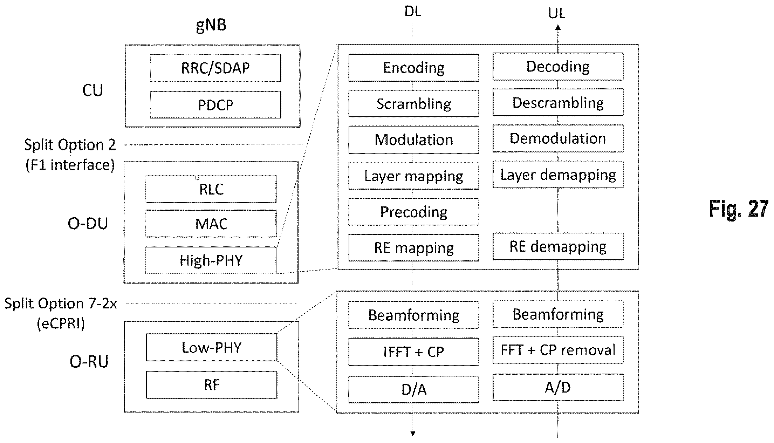

**Fig. 27** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full Duplex operation may be applied to an operation in which the terminal is capable of performing sidelink transmission/reception simultaneously. Further, the Full Duplex operation may be applied to an operation in which the terminal is capable of performing sidelink transmission/reception and uplink or downlink transmission/reception simultaneously.

### Further Variants, including Hardware and Software Implementation of the present disclosure

In the following, variants of the present disclosure will be described.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), Vehicle to Everything (V2X) communication, and communication between an Ambient IoT Reader and an Ambient loT Device. The channels in the present disclosure may be replaced with PSCCH, PSSCH, Physical Sidelink Feedback Channel (PSFCH), PSBCH, PRDCH (Physical Reader-to-Device Channel), PDRCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal.

The antenna port may also be defined as the minimum unit for multiplication of a precoding vector weighting.

### (Ambient loT)

The terminal and the base station in one exemplary embodiment of the preset disclosure may be replaced with any of an Ambient IoT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to an aspect 1, an Internet of Things, loT, device is provided, comprising:
a transceiver, which in operation, receives a paging message from a reader,
a circuitry, which in operation, determines whether to perform a re-access for a current access procedure, based on the received paging message and a status of the current access procedure, and
wherein a default status of the current access procedure is successful or unsuccessful.

According to an aspect 2, based on the aspect 1, the circuitry changes the status of the current access procedure from the default status to a converse status based on a feedback message from the reader regarding the current access procedure.

According to an aspect 3, based on the aspects 1 or 2, access procedures are identified by an access procedure ID, wherein the paging message includes an access procedure ID for the current access procedure, optionally wherein the access procedure ID is stored by the loT device for the current access procedure having the status of successful, and wherein the access procedure ID is not stored by the loT device for the current access procedure having the status of unsuccessful, and optionally wherein the circuitry, in operation, stores the access procedure ID and determines whether a paging message is directed to the current access procedure by determining whether the access procedure ID of a received paging message is the same as the access procedure ID available in the loT device.

According to an aspect 4, based on any one of the aspects 1 to 3, the circuitry stores the status of the current access procedure, optionally wherein the status of the current access procedure is in association with an access procedure ID of the current access procedure, and optionally wherein the default status is stored or is not stored but assumed in the absence of the available status.

According to an aspect 5, based on any one of aspects 1 to 4, the circuitry determines that the current access procedure is completed when
- an access status timer for the current access procedure expires,
- an energy off state of an energy-saving cycle of the loT device starts, and
- a paging message initiating a subsequent access procedure is received by the loT device.

Optionally, upon determining that the current access procedure is completed, the circuity, in operation, stops monitoring for the feedback message from the reader regarding the current access procedure. Optionally, the default status of the current access procedure is uncertain, and upon determining that the current access procedure is completed, the circuity, in operation, changes the status of the current access procedure from uncertain to respectively successful or unsuccessful.

According to an aspect 6, based on any one of aspects 1 to 5, the default status of the current access procedure is unsuccessful, and wherein the circuitry, in operation, changes the status of the current access procedure from unsuccessful to successful, based on a positive feedback message from the reader. The positive feedback message positively acknowledges the receipt of a message of the current access procedure, and is
- a positive acknowledgement message received from the reader for a previous message transmitted by the loT device, or
- a follow-up message received from the reader as part of the access procedure subsequent to a previous message transmitted by the loT device.

Optionally, the positive feedback message includes an ID of the loT device. Optionally, the positive acknowledgement message is received in the same time and/or frequency resources of a subsequent time slot reserved for the loT device for transmitting or receiving a previous message of the current access procedure.

According to an aspect 7, based on any one of aspects 1 to 6, the default status of the current access procedure is successful, and wherein the circuitry, in operation, changes the status of the current access procedure from successful to unsuccessful, based on a negative feedback message from the reader. Optionally, the negative feedback message negatively acknowledges the receipt of a message of the current access procedure, and is
- a negative acknowledgement message received from the reader for a previous message transmitted by the loT device.

Optionally, the negative feedback message includes an ID of the loT device. Optionally, the negative acknowledgement message is received in the same time and/or frequency resources of a subsequent time slot reserved for the loT device for transmitting or receiving a previous message of the current access procedure.

According to an aspect 8, based on any one of aspects 1 to 7, the default status is kept successful during a current energy-saving cycle. Optionally, the circuitry, in operation, determines to skip performing an access procedure in response to the paging message, in case a previous paging message already initiated a previous access procedure during the current energy-saving cycle.

According to an aspect 9, based on aspect 8, the energy-saving cycle is determined based on an energy level of the loT device and/or based on one or more timer to switch between energy on and energy off states. Optionally, the loT device is in an energy on state in case the energy level is above a first energy threshold, and optionally wherein the loT device is in an energy off state in case the energy level is below a second energy threshold. Optionally, the one or more timer define alternating time periods during with the loT device is in an energy off state and in an energy on state, wherein the time periods are of different time length.

According to an aspect 10, based on aspect 8 or 9, access procedures are identified by an access procedure ID, wherein the paging message includes an access procedure ID, and wherein the access procedure ID is deleted when the loT device enters the energy off state.

According to an aspect 11, based on any one of aspect 8 to 10, the transceiver, in operation, receives a re-transmission request from the reader during the energy on state, and the transceiver, in operation, re-transmits a message of the access procedure from the loT device to the reader in response to the re-transmission request, optionally wherein the re-transmission request includes an ID of the loT device.

According to an aspect 12, based on any one of aspects 1 to 11, the access procedure performed between the loT device and the reader is triggered by the paging message and includes
- an inventory operation, comprising a first device-to-reader, D2R, message, and
- optionally further includes a command-response operation, which includes a command message from the reader to the loT device and a command response message from the loT device to the reader.

Optionally, the paging message includes a group ID, identifying a group of IoT devices to be paged. Optionally, the first D2R transmission comprises a device ID or an access stratum, AS, ID of the device. Optionally, the inventory operation comprises a random access procedure between the loT device and the reader, including a first random access message transmitted from the loT device to the reader and a random access response message transmitted from the reader to the loT device, optionally wherein the first random access message includes a random ID, which is also included in the random access response message to resolve the contention.

According to an aspect 13, based on any one of aspects 1 to 12, the transceiver, in operation, receives a re-transmission request from the reader, and the transceiver, in operation, re-transmits a message of the access procedure from the loT device to the reader in response to the re-transmission request, optionally wherein the re-transmission request includes an ID of the loT device.

According to an aspect 14, a reader is provided comprising:
a transceiver, which in operation, transmits a paging message to an loT device, the paging message triggering the loT device to perform an access procedure,
a circuitry, which in operation, determines a default status of the current access procedure to successful or unsuccessful,
the circuitry, which in operation, determines, based on a status of the current access procedure, whether to transmit another paging message to the loT device for triggering a re-access for the current access procedure or for triggering an initial access for another access procedure.

According to an aspect 15, based on claim 14, the circuitry, in operation, changes the status of the current access procedure from the default status to a converse status, based on a feedback message regarding the current access procedure, transmitted from the reader to the loT device.

According to an aspect 16, based on aspect 14 or 15, the circuitry, in operation, determines that the current access procedure is completed when
- an access status timer for the current access procedure expires,
- an energy off state of an energy-saving cycle of the loT device starts, and
- a paging message initiating a subsequent access procedure is transmitted to the loT device.

Optionally, the default status of the current access procedure is set to uncertain, and upon determining that the current access procedure is completed, the circuity, in operation, changes the status of the current access procedure from uncertain to respectively successful or unsuccessful.

According to an aspect 17, based on any one of aspects 14 to 16, the default status of the current access procedure is unsuccessful, and wherein the circuitry, in operation, changes the status of the current access procedure from unsuccessful to successful, when transmitting a positive feedback message to the loT device. Optionally, the positive feedback message positively acknowledges the receipt of a message of the current access procedure received from the loT device, and is
- a positive acknowledgement message transmitted to the loT device for a previous message received from the loT device, or
- a follow-up message transmitted to the loT device as part of the access procedure subsequent to a previous message received from the loT device.

Optionally, the positive feedback message includes an ID of the loT device. Optionally, the positive acknowledgement message is transmitted in the same time and/or frequency resources of a subsequent time slot reserved for the loT device for transmitting or receiving a previous message of the current access procedure.

According to an aspect 18, based on any one of aspects 14 to 17, the default status of the current access procedure is successful, and wherein the circuitry, in operation, changes the status of the current access procedure from successful to unsuccessful, when transmitting a negative feedback message to the loT device. Optionally, the negative feedback message negatively acknowledges the receipt of a message of the current access procedure received from the loT device, and is
- a negative acknowledgement message transmitted to the loT device for a previous message received from the loT device.

Optionally, the negative feedback message includes an ID of the loT device. Optionally, the negative acknowledgement message is transmitted in the same time and/or frequency resources of a subsequent time slot reserved for the loT device for transmitting or receiving a previous message of the current access procedure.

According to an aspect 19, based on any one of claims 14 to 18, the default status is kept successful during a current energy-saving cycle of the loT device. Optionally, the circuitry, in operation, determines the timing for transmitting a paging message to the loT device for triggering an initial access or a re-access of an access procedure, based on the current energy-saving cycle and based on that the default status is kept by the loT device for an access procedure as successful during a complete energy-saving cycle.

According to an aspect 20, based on aspect 19, the circuitry, in operation, determines the energy saving cycle of the loT device based on an energy level of the loT device and/or based on one or more timer to switch between energy on and energy off states. Optionally, the loT device is in an energy on state based on a minimum time which the energy level is kept in an energy on state. Optionally, the loT device is in an energy off state based on a maximum time which the energy level is kept in an energy off state. Optionally, the one or more timer define alternating time periods during with the loT device is in an energy off state and in an energy on state, wherein the time periods are of different time length.

According to an aspect 21, based on aspect 19 or 20, the transceiver, in operation, transmits a re-transmission request to the loT device during the energy on state, requesting the loT to re-transmit a message of the access procedure from the loT device to the reader in response to the re-transmission request, optionally wherein the re-transmission request includes an ID of the loT device.

According to an aspect 22, based on any one of aspects 19 to 21, the circuitry, in operation, determines whether all loT devices successfully completed an access procedure of a first transaction. In case all loT devices successfully completed the access procedure of the first transaction, transmitting a paging message to the loT devices for the next transaction. In case not all loT devices successfully completed the access procedure of the first transaction, transmitting a paging message to trigger a re-access for the first transaction.

According to an aspect 23, based on any one of aspects 19 to 22, access procedures are identified by an access procedure ID, wherein the paging message includes an access procedure ID for the current access procedure.

According to an aspect 24, a method is provided comprising the following steps performed by an Internet of Things, loT, device:
receiving a paging message from a reader,
determining whether to perform a re-access for a current access procedure, based on the received paging message and a status of the current access procedure, and
wherein a default status of the current access procedure is successful or unsuccessful.

According to an aspect 25, a method is provided comprising the following steps performed by a reader:
transmitting a paging message to an loT device, the paging message triggering the loT device to perform an access procedure,
determining a default status of the current access procedure to successful or unsuccessful,
determining, based on a status of the current access procedure, whether to transmit another paging message to the loT device for triggering a re-access for the current access procedure or for triggering an initial access for another access procedure.

According to an aspect 26, an integrated circuit is provided, which, in operation, controls a process of an Internet of Things, loT, device, the process comprising the following steps performed by the loT device:
receiving a paging message from a reader,
determining whether to perform a re-access for a current access procedure, based on the received paging message and a status of the current access procedure, and
wherein a default status of the current access procedure is successful or unsuccessful.

According to an aspect 27, an integrated circuit is provided, which, in operation, controls a process of a reader, the process comprising the following steps performed by the reader:
transmitting a paging message to an loT device, the paging message triggering the loT device to perform an access procedure,
determining a default status of the current access procedure to successful or unsuccessful,
determining, based on a status of the current access procedure, whether to transmit another paging message to the loT device for triggering a re-access for the current access procedure or for triggering an initial access for another access procedure.

## Claims

1. An Internet of Things, loT, device, comprising:
a transceiver, which in operation, receives a paging message from a reader,
a circuitry, which in operation, determines whether to perform a re-access for a current access procedure, based on the received paging message and a status of the current access procedure, and
wherein a default status of the current access procedure is successful or unsuccessful.

2. The loT device according to claim 1, wherein the circuitry, in operation, changes the status of the current access procedure from the default status to a converse status based on a feedback message from the reader regarding the current access procedure.

3. The loT device according to claim 1 or 2, wherein access procedures are identified by an access procedure ID, wherein the paging message includes an access procedure ID for the current access procedure,
optionally wherein the access procedure ID is stored by the loT device for the current access procedure having the status of successful, and wherein the access procedure ID is not stored by the loT device for the current access procedure having the status of unsuccessful, and
optionally wherein the circuitry, in operation, stores the access procedure ID and determines whether a paging message is directed to the current access procedure by determining whether the access procedure ID of a received paging message is the same as the access procedure ID available in the loT device.

4. The loT device according to any one of claims 1 to 3, wherein the circuitry, in operation, stores the status of the current access procedure, optionally wherein the status of the current access procedure is in association with an access procedure ID of the current access procedure, and
optionally wherein the default status is stored or is not stored but assumed in the absence of the available status.

5. The loT device according to any one of claims 1 to 4, wherein the circuitry, in operation, determines that the current access procedure is completed when
• an access status timer for the current access procedure expires,
• an energy off state of an energy-saving cycle of the loT device starts, and
• a paging message initiating a subsequent access procedure is received by the loT device,
optionally wherein upon determining that the current access procedure is completed, the circuity, in operation, stops monitoring for the feedback message from the reader regarding the current access procedure,
optionally wherein the default status of the current access procedure is uncertain, and upon determining that the current access procedure is completed, the circuity, in operation, changes the status of the current access procedure from uncertain to respectively successful or unsuccessful.

6. The loT device according to any one of claims 1 to 5, wherein the default status of the current access procedure is unsuccessful, and wherein the circuitry, in operation, changes the status of the current access procedure from unsuccessful to successful, based on a positive feedback message from the reader,
optionally wherein the positive feedback message positively acknowledges the receipt of a message of the current access procedure, and is
• a positive acknowledgement message received from the reader for a previous message transmitted by the loT device, or
• a follow-up message received from the reader as part of the access procedure subsequent to a previous message transmitted by the loT device, and
optionally wherein the positive feedback message includes an ID of the loT device, and
optionally wherein the positive acknowledgement message is received in the same time and/or frequency resources of a subsequent time slot reserved for the loT device for transmitting or receiving a previous message of the current access procedure.

7. The loT device according to any one of claims 1 to 6, wherein the default status of the current access procedure is successful, and wherein the circuitry, in operation, changes the status of the current access procedure from successful to unsuccessful, based on a negative feedback message from the reader,
optionally wherein the negative feedback message negatively acknowledges the receipt of a message of the current access procedure, and is
• a negative acknowledgement message received from the reader for a previous message transmitted by the loT device, and
optionally wherein the negative feedback message includes an ID of the loT device, and
optionally wherein the negative acknowledgement message is received in the same time and/or frequency resources of a subsequent time slot reserved for the loT device for transmitting or receiving a previous message of the current access procedure.

8. The loT device according to any one of claims 1 to 7, wherein the default status is kept successful during a current energy-saving cycle.
optionally wherein the circuitry, in operation, determines to skip performing an access procedure in response to the paging message, in case a previous paging message already initiated a previous access procedure during the current energy-saving cycle.

9. The loT device according to claim 8, wherein the energy-saving cycle is determined based on an energy level of the loT device and/or based on one or more timer to switch between energy on and energy off states,
optionally wherein the loT device is in an energy on state in case the energy level is above a first energy threshold, and optionally wherein the loT device is in an energy off state in case the energy level is below a second energy threshold, and
optionally wherein the one or more timer define alternating time periods during with the loT device is in an energy off state and in an energy on state, wherein the time periods are of different time length.

10. A reader comprising:
a transceiver, which in operation, transmits a paging message to an loT device, the paging message triggering the loT device to perform an access procedure,
a circuitry, which in operation, determines a default status of the current access procedure to successful or unsuccessful,
the circuitry, which in operation, determines, based on a status of the current access procedure, whether to transmit another paging message to the loT device for triggering a re-access for the current access procedure or for triggering an initial access for another access procedure.

11. The reader according to claim 10, wherein the circuitry, in operation, changes the status of the current access procedure from the default status to a converse status, based on a feedback message regarding the current access procedure, transmitted from the reader to the loT device.

12. The reader according to claim 10 or 11, wherein the default status of the current access procedure is unsuccessful, and wherein the circuitry, in operation, changes the status of the current access procedure from unsuccessful to successful, when transmitting a positive feedback message to the loT device,
optionally wherein the positive feedback message positively acknowledges the receipt of a message of the current access procedure received from the loT device, and is
• a positive acknowledgement message transmitted to the loT device for a previous message received from the loT device, or
• a follow-up message transmitted to the loT device as part of the access procedure subsequent to a previous message received from the loT device, and
optionally wherein the positive feedback message includes an ID of the loT device, and
optionally wherein the positive acknowledgement message is transmitted in the same time and/or frequency resources of a subsequent time slot reserved for the loT device for transmitting or receiving a previous message of the current access procedure.

13. The reader according to any one of claims 10 to 12, wherein the default status of the current access procedure is successful, and wherein the circuitry, in operation, changes the status of the current access procedure from successful to unsuccessful, when transmitting a negative feedback message to the loT device,
optionally wherein the negative feedback message negatively acknowledges the receipt of a message of the current access procedure received from the loT device, and is
• a negative acknowledgement message transmitted to the loT device for a previous message received from the loT device, and
optionally wherein the negative feedback message includes an ID of the loT device, and
optionally wherein the negative acknowledgement message is transmitted in the same time and/or frequency resources of a subsequent time slot reserved for the loT device for transmitting or receiving a previous message of the current access procedure.

14. The reader according to any one of claims 10 to 13, wherein the default status is kept successful during a current energy-saving cycle of the loT device, and
optionally wherein the circuitry, in operation, determines the timing for transmitting a paging message to the loT device for triggering an initial access or a re-access of an access procedure, based on the current energy-saving cycle and based on that the default status is kept by the loT device for an access procedure as successful during a complete energy-saving cycle.

15. The reader according to claim 14, wherein the circuitry, in operation, determines the energy saving cycle of the loT device based on an energy level of the loT device and/or based on one or more timer to switch between energy on and energy off states,
optionally wherein the loT device is in an energy on state based on a minimum time which the energy level is kept in an energy on state, and optionally wherein the loT device is in an energy off state based on a maximum time which the energy level is kept in an energy off state, and
optionally wherein the one or more timer define alternating time periods during with the loT device is in an energy off state and in an energy on state, wherein the time periods are of different time length.
